# EUROPÄISCHE PATENTSCHRIFT

(11) **EP 4 269 321 B1**
(45) Veröffentlichungstag und Bekanntmachung des Hinweises auf die Patenterteilung: **15.04.2026**
(21) Anmeldenummer: 23196461.0
(22) Anmeldetag: 03.02.2020
(51) Int. Cl.: B66F 9/06, B66F 9/075, B66F 9/24, G05D 1/00

(54) **FÖRDEREINRICHTUNG FÜR LADUNGSTRÄGER**
CONVEYING DEVICE FOR LOAD CARRIERS
DISPOSITIF DE TRANSPORT POUR PORTEURS DE CHARGE

(30) Priorität: 15.02.2019 DE 102019001125; 01.03.2019 DE 102019001455
(43) Veröffentlichungstag der Anmeldung: 01.11.2023
(62) Teilanmeldung aus: 20703222.8
(73) Patentinhaber: Filics GmbH, 81541 München (DE)
(72) Erfinder: Lutzer, Johannes Julius, Munich (DE); Kolls, Gregor, Munich (DE)
(74) Vertreter: SSM Sandmair

(56) Entgegenhaltungen:
- EP-A1- 3 020 614
- DE-A1- 102014 017 254
- DE-A1- 102015 004 330
- DE-A1- 102015 010 718

## Beschreibung

Die Erfindung betrifft eine Fördereinrichtung zum Fördern von beladenen und unbeladenen Ladungsträgern. Die Fördereinrichtung weist eine erste Fördereinheit und eine zweite Fördereinheit auf, wobei beide Fördereinheiten unabhängig voneinander verfahren können.

Die erste und die zweite Fördereinheit können sich dabei jeder Zeit, eigenständig oder gepaart als Fördereinrichtung, autonom beispielsweise innerhalb einer Halle bewegen. Eine solche Fördereinrichtung ist beispielsweise aus der DE 10 2007 046 868 A1 bekannt, wobei zwei Fördereinheiten eine Fördereinrichtung bilden. Eine derartige Fördereinrichtung ist dazu konzipiert, Ladungsträger, insbesondere Paletten, zu unterfahren, mithilfe einer Hub-/Senkeinheit zu heben, im angehobenen Zustand zu einem Ort zu fördern und wieder abzusetzen. Dabei kann jede Fördereinheit in ihrer Dimension so ausgestaltet sein, dass sie das Lichtraumprofil der Ladungsträger unterfahren kann.

Aus der DE 10 2008 014 877 A1 ist eine weitere beispielhafte Ausführung der Fördereinrichtung bekannt, wobei dieses System das automatische Verladen von Paletten in Lastkraftwagen ermöglicht. Hierzu bilden zwei Transportwagen ein Transportwagenpaar, welche Paletten unterfahren, diese anheben und fördern kann. Eine derartige Fördereinheit ist mit einem elektrischen Zuleitungskabel zur Energieversorgung versehen, wobei das Kabel auch als Zugseil verwendet werden kann, um Fahrwegkorrekturen vorzunehmen. Das Dokument EP 3020614 beschreibt ein Steuerungsverfahren für eine Fördervorrichtung zum Transportieren beladener und unbeladener Ladungsträger und offenbart den Oberbegriff des Anspruchs 1.

Ein kabelloses Fördersystem ist für eine uneingeschränkte Flexibilität notwendig. Dazu müssen alle notwendigen Bestandteile der Fördereinheit, eine Steuerungseinheit, mindestens eine Hub-/Senkeinheit, eine Energieversorgung und mindestens eine Antriebseinheit, bestehend aus mindestens einem angetriebenen Rad in jede Fördereinheit integriert werden. Somit ist eine hoch integrierte Bauweise erforderlich.

Für eine derartige Fördereinrichtung ist zwingend eine Kollisionswarnung erforderlich, um in nicht abgeschlossenen oder nicht eingezäunten Bereichen und somit im Umfeld von Personen zu arbeiten. Eine Möglichkeit zur Kollisionswarnung könnten dabei Detektionseinrichtungen sein. Ohne eine solche Detektionseinrichtung ist eine Anwendung wie beispielsweise in Produktions- oder Logistikbetrieben, welche keine Hallenabgrenzung vorgesehen haben, unmöglich. Besonders vorteilhaft ist es, wenn die Kollisionswarnung für jede beliebe Fahrtrichtung vorgesehen ist und somit die gesamte Flexibilität der Fördereinrichtung, beispielsweise das seitliche Verfahren der Fördereinrichtung, genutzt werden kann. Des Weiteren muss eine bodennahe Kollisionswarnung eine hohe Robustheit gewährleisten.

Ferner ist für die flexible Fördereinheit eine Orientierung im Umfeld notwendig. Dafür können verschiedene Leitsysteme vorgesehen werden. Beispielsweise können dafür Bodenmarkierungen verwendet werden, auf welche die Fördereinheit verfährt. Jedoch schränken diese die Flexibilität des Systems erneut stark ein.

Aus der DE 10 2015 010 718 A1 ist eine radarbasierte, richtungsgebundene Detektionseinrichtung für Fördereinheiten einer Fördereinrichtung bekannt.

Es ist eine Aufgabe der Erfindung eine Fördereinrichtung bereit zu stellen, welche ein flexibles, effektives und gleichzeitig kollisionssicheres Fördern von Ladungsträgern ermöglicht.

### Funktionelle Gleichstellung

Die Aufgabe wird erfindungsgemäß durch die Merkmale des Anspruchs 1 gelöst. Vorteilhafte Weiterbildungen ergeben sich aus den abhängigen Ansprüchen, der Beschreibung und den Figuren.

Die Aufgabe wird erfindungsgemäß durch ein Steuerungsverfahren für ein Fördersystem zum Fördern von beladenen und unbeladenen Ladungsträgern, in welchem mindestens zwei Fördereinheiten eine Fördereinrichtung bilden, gelöst. Vorteilhafterweise ist jede Fördereinheit relativ zur anderen Fördereinheit und unabhängig von der jeweils anderen Fördereinheit entlang einer beliebigen Fahrtrichtung bewegbar, wobei jede Fördereinheit bevorzugt ein Steuersystem zur Steuerung der Bewegung der jeweiligen Fördereinheit umfasst. Erfindungsgemäß führt das Steuersystem zur Steuerung der Bewegung der jeweiligen Fördereinheit eine Steuerlogik aus, wobei das die Steuersysteme Fördereinheiten die Steuerlogik unabhängig voneinander und synchron ausführen, dass die Ausführung der Steuerlogik durch die Steuersysteme der ersten und zweiten Fördereinheit gleichzeitig und in gleicher Weise stattfindet.

Das Steuersystem kann als Recheneinheit, insbesondere als Computer, und/oder datenverarbeitende Vorrichtung ausgebildet sein. Vorteilhafterweise sind die Steuersysteme aller Fördereinheiten gleich ausgebildet und/oder führen die Steuerlogik gleich aus. Durch Ausführung der Steuerlogik werden durch das Steuersystem Steuerparameter bereitgestellt, welche zur Steuerung der Bewegung der Fördereinheit an die ausführenden Bauteile der Fördereinheit weitergeleitet werden können. Beispielsweise könnte ein Steuersignal an eine Hub-/Senkeinheit der Fördereinheit dazu führen, dass ein auf der Fördereinheit aufliegender Ladungsträger durch die Fördereinheit angehoben wird. Außerdem könnte beispielsweise durch Ausführen der Steuerlogik ein Steuersignal vom Steuersystem an ein Antriebssystem der Fördereinheit übermittelt werden, welches dazu führt, dass das Antriebssystem eine Kurvenfahrt der Fördereinheit einleitet.

Unter einer synchronen Ausführung wird im Folgenden die gleichzeitige und/oder mit gleicher Geschwindigkeit ablaufende Ausführung der Steuerlogik beschrieben. Diese kann insbesondere dadurch realisiert werden, dass die Ausführung der Steuerlogik innerhalb festgelegter Zeitfenster stattfindet und/oder die Taktfrequenz der Steuersysteme identisch ist.

Bei der Steuerlogik handelt es sich vorteilhafterweise um eine Software und/oder ein computerimplementiertes Verfahren, welches durch die Steuersysteme der Fördereinheiten ausgeführt wird. Die Steuerlogik kann, wie im Folgenden beschriebenen, eine Vielzahl von einzelnen Berechnungsschritten bzw. Verfahrensschritten, welche auch als Entscheidungslogik ausgebildet sein können, aufweisen. Die Steuerlogik ist dabei keinesfalls auf die im folgenden beschriebenen Verfahrensschritte beschränkt.

Bei einer weiterbildenden Ausführungsform führen die Steuersysteme der Fördereinheiten die Steuerlogik derart unabhängig und synchron voneinander aus, dass jeder einzelne Verfahrensschritte der Steuerlogik durch die Steuersysteme unabhängig voneinander und synchron ausgeführt wird. Beispielsweise könnte für jeden Verfahrensschritt ein Zeitfenster vorgeben sein, innerhalb welchem der Verfahrensschritt der Steuerlogik durch alle Steuersysteme, unabhängig von den jeweils anderen Steuersystemen auszuführen ist. Dies führt besonders vorteilhaft zu einer funktionellen Gleichstellung der Fördereinheiten.

Bevorzugt wird das Steuerungsverfahren durch eine Fördereinrichtung ausgeführt, die alle Mittel zur Ausführung des Steuerungsverfahrens umfassen. Vorteilhafterweise weisen die Fördereinheiten der Fördereinrichtung eine identische Bauweise, also einen identischen Aufbau, auf.

Bei einer bevorzugten Ausführungsform umfassen die Fördereinheiten jeweils ein Sensorsystem zur Detektion von Umgebungsparametern. Die durch das Sensorsystem detektierten Umgebungsparameter werden vorzugsweise in einem Detektionsschritt der Steuerlogik verarbeitet. Vorteilhafterweise werden die Umgebungsparameter auf Hindernisse und/oder Ladungsträger im Umfeld der Fördereinheit untersucht. Nach Abschluss des Detektionsschritts werden Umfeldinformationen bereitgestellt, welche Informationen über Hindernisse und/oder Ladungsträger im Umfeld der Fördereinheit umfassen. Alternativ und/oder zusätzlich können die Umfeldinformationen aber auch andere relevante Informationen der Umgebung aufweisen. Beispielsweise stellen Informationen hinsichtlich des Ladungsträgers, insbesondere die Masse des Ladungsträgers, welcher auf einer Fördereinheit aufliegt, denkbare Informationen innerhalb der Umfeldinformationen dar.

Bei einer vorteilhaften Weiterentwicklung werden neben den Umfeldinformationen auch Güteinformationen zu den Umfeldinformationen bereitgestellt. Diese können insbesondere während eines Güteberechnungsschritts, welcher sich vorteilhafterweise dem Detektionsschritt anschließt, ermittelt werden. Eine Güteinformation kann eine Information über die Güte der dazugehörigen Umfeldinformationen, insbesondere einen Gütewert der dazugehörigen Umfeldinformationen, aufweisen.

Bevorzugt umfasst jede Fördereinheiten eine Sende- und Empfangseinheit, welche dazu ausgebildet ist Informationen über einen Kommunikationskanal eines Netzwerkes zu versenden und zu empfangen. Der Kommunikationskanal des Netzwerks ist bevorzugt dazu ausgebildet, dass über diesen eine Vielzahl an Informationen und Informationsarten versendet und empfangen werden kann. Es ist außerdem denkbar, dass ein Netzwerk eine Vielzahl von Kommunikationskanälen aufweist, wobei über jeden dieser Kommunikationskanäle Informationen zwischen den Fördereinheiten ausgetauscht werden können. Bei den Informationen, welche durch die Sende- und Empfangseinheit versendet werden können, kann es sich beispielsweise um die Umfeldinformationen und/oder die Umfeldinformationen im Zusammenhang mit den Güteinformationen und/oder über Statusinformationen der jeweiligen Fördereinheit handeln, wobei diese Aufzählung keinesfalls abschließend ist. Die Statusinformationen einer Fördereinheit können dabei ebenfalls eine Vielzahl an Informationen beinhalten. Beispielsweise könnte eine Statusinformationen einer Fördereinheit eine Information über den elektrischen Ladezustand des Energieträgers der Fördereinheit, den Verschleiß einer Fördereinheit und/oder andere spezifische Kennwerte der jeweiligen Fördereinheit umfassen.

In einer beispielhaften Ausführungsform, welche insbesondere für die funktionelle Gleichstellung relevant ist, enthalten die Umfeldinformationen und/oder Güteinformationen keine Informationen über die versendende Fördereinheit. Mit anderen Worten ist es beim Empfang einer solchen Informationen nicht nachvollziehbar, durch welche Fördereinheit die empfangenen Informationen versendet wurde.

Bei einer vorteilhaften Weiterentwicklung umfasst die Steuerlogik einen Güteprüfschritt. Bei der Ausführung des Güteprüfschritts werden Umfeldinformationen und Güteinformationen, welche durch die Sende- und Empfangseinheit einer Fördereinheit empfangen wurden, mit den durch die empfangende Fördereinheit berechneten Umfeldinformation und Güteinformationen verglichen. Insbesondere wenn die empfangenen Umfeldinformationen einen höheren Gütewert als die berechneten Umfeldinformationen aufweisen, werden die Umfeldinformation und Güteinformationen derart zusammengeführt, dass die neuen Umfeldinformationen einen höheren Gütewert als vorher aufweisen. Mit anderen Worten wird durch die Zusammenführung der Umfeldinformationen die Genauigkeit der Umfeldinformationen erhöht. Insofern die Umfeldinformationen einen für die weitere Verarbeitung hinreichend hohen Gütewert erreichen bzw. ein festgelegter Schwellenwert für den Gütewert überschritten wird, wird den Umfeldinformationen eine maximale Güte zugewiesen. Bevorzugt werden die Umfeldinformationen mit den dazugehörigen neuen Güteinformationen über die Sende- und Empfangseinheit versendet und zur weiteren Steuerung der Fördereinheit herangezogen.

Der Güteprüfschritt kann in allgemeinerer Form auch mit einer Information, sowie einer Wahrscheinlichkeit zum Wahrheitsgehalt der Information beschrieben werden. Im Güteprüfschritt kann der erfasste Wahrheitsgehalt zu einem neuen, beispielsweise höheren Wahrheitsgehalt führen. Insbesondere kann dabei ein Schwellwert definiert, ab welchem jede einzelne Fördereinheit eine Information als 100% und somit vollständig wahrnehmen kann. Jede Fördereinheit kann somit unabhängig voneinander zu dem Ergebnis einer vollständigen Information erlangen. Diese vollständige Information kann anschließend Grundlage für weitere Entscheidungsprozesse sein.

In einer beispielhaften funktionalen Gleichstellung kann jede einzelne Fördereinheit einen Ladungsträger erfassen und anschließend die Distanz zum Ladungsträger, sowie deren relative Orientierung errechnen. Jedoch ist diese Erfassung mit dem Wahrscheinlichkeitswert behaftet, mit welcher Wahrscheinlichkeit es sich um einen Ladungsträger eines gewissen Typs handelt. Ein Ladungsträger kann beispielsweise an seiner charakteristischen, geometrischen Abmaßen erkannt werden. In der beispielhaften Ausführung erfassen nun beide Fördereinheiten der Fördereinrichtung einen vorausgelegenen Ladungsträger. Die erste Fördereinheit kann nun mit einer Wahrscheinlichkeit von 95% sagen, dass es sich beispielsweise um eine Palette in einer gewissen Distanz handelt. Die zweite Fördereinheit erfasst nun ebenfalls jenen gewissen Ladungsträger, jedoch kann diese zweite Fördereinheit lediglich einen Wahrscheinlichkeitswert von 80% ausgeben, da beispielsweise die Sicht zwischen Fördereinheit und Ladungsträger eingeschränkt ist. Dies kann beispielsweise, insbesondere durch die sehr bodennahe Erfassung durch die Sensoreinheiten, durch Staub gegeben sein, jedoch sind auch weitere sichtmindernde Ursachen denkbar. Durch eine Kombination dieser beiden Informationen kann ein Wahrscheinlichkeitswert von beispielsweise 98% erreicht werden. Dieser Wahrscheinlichkeitswert übersteigt somit den beispielsweise definierten Schwellwert und sorgt somit für die vollständige Informationserkenntnis, dass sich in dem gewissen Abstand eine Palette befindet. Zu dieser Information kann nun jede Fördereinheit eigenständig und unabhängig schließen, da beide Fördereinheit aufgrund der zur Verfügung gestellten Daten und der funktionalen Gleichstellung mit dem identischen Schwellenwert zum gleichen Ergebnis kommen.

In einer weiteren vorteilhaften Ausführung kann jede Fördereinheit ebenfalls andere Fördereinheiten erfassen. Dabei enthält die Information beispielsweise die Distanz, den Zeitpunkt, als auch geschätzte Geschwindigkeit. Weitere Parameter, welche auf die Position einer Einheit zu einem Zeitpunkt schließen, sind denkbar. Durch die Erhöhung des Wahrscheinlichkeit Werts verschiedener Informationen über dasselbe Objekt im Güteprüfschritt kann somit eine Position einer ersten Fördereinheit zum Zeitpunkt mit einer hohen Wahrscheinlichkeit festgestellt werden. Ab einem gewissem Schwellwert könnte die Information mit der selbst-gemessen Ist-Position der ersten Fördereinheit abgeglichen werden. Im angenommenen Falle, dass eine erhebliche Differenz festgestellt werden kann, könnte jede Fördereinheit, in diesem Falle die ersten Fördereinheit, eigenständig auf Basis der Differenz den digitalen Fehler korrigieren. Die Korrektur des digitalen Fehlers meint dabei, den eigenen gedachten Positionswert anzupassen, sodass eine absolute Genauigkeit wiederhergestellt ist. In einer besonders vorteilhaften Ausführung wird durch eine hohe Bandbreite des Kommunikationskanals, sowie die direkten Informationsbereitstellung die Genauigkeit der Fördereinrichtung deutlich erhöht.

In einer weiteren vorteilhaften Ausführung des Güteprüfschritts kann es zu einem geschickten Aufnehmen des Ladungsträgers kommen. Im beispielhaften Szenario sind zwei Fördereinheiten in einen Ladungsträger eingefahren und bilden nun eine Fördereinrichtung. Die Fördereinrichtung will nun den Ladungsträger mit den Hubvorrichtung anheben. Während dem Hubprozess werden dabei Information erfasst, welche Rückschlüsse auf die Last, als auch die Lastverteilung, mit welchem der Ladungsträger beladen ist, ermöglichen. Zeitgleich und/oder nach dem Hubprozess stellt jede Fördereinheit unter Berücksichtigung seiner relativen Position im Ladungsträger diese Informationen zur Verfügung. Anschließend können beide Fördereinheiten unabhängig voneinander auf die Informationen zugreifen, und mittels des Güteprüfschritts auf die Lastverteilung auf dem Ladungsträger schließen. Die Lastverteilung meinte dabei ein Wissen darüber, an welcher Stelle der Ladungsträger mit welchem Gewicht beladenen ist. Mindestens meint die Lastverteilung jedoch eine Schätzung des Gesamtgewichts des Ladungsträgers mit möglicher Zuladung.

In einer weiteren Form der funktionalen Gleichstellung ist eine Logik denkbar, welche auf einer Minimierung von Kosten basiert. Eine derartige Ausführungsform ist insbesondere dann von Relevanz, wenn mehrere Fördereinrichtungen ein Fördersystem bilden und zur Durchführung eines Förderauftrags mehrere Fördereinheiten in Frage kommen. Bevorzugt umfasst die Steuerlogik hierfür einen Kostenprüfungsschritt. Dabei kann jede Fördereinheit seinen eigenen Kostenwert zu einer bestimmten Aufgabe berechnen und stellt diese Information über den Kommunikationskanal unter einer passenden Informationsbenennung zur Verfügung. Nach einem Ablauf einer gewissen Zeit können alle erfassten Kosten verglichen werden und der kleinste zur Verfügung gestellte Kosten ausgewählt werden. Durch den Vergleich kann jede Fördereinheit eigenständig auf Basis der funktionalen Gleichstellung bestimmen, welche Fördereinheit für eine Aufgabe ausgewählt wird. Alle Fördereinheiten kommen dabei vorteilhafterweise zum gleichen Entschluss.

Zur genaueren Ausführung sind die folgenden, aufgeführten Entscheidungsbeispiele denkbar.

In einer vorteilhaften Ausführung der vorliegenden Erfindung kann somit die Auftragszuweisung, beispielsweise ein Transportauftrag einen gewissen Ladungsträger zu transportieren automatisch zugewiesen werden. Dabei berechnet jede Fördereinheit durch Ausführung des Kostenprüfungsschritt ein Kostenwert, welcher beispielsweise auf Basis seiner Distanz zum Ladungsträger, sein Spannungslevel des Energieträgers, seiner Zielposition und seinem zu fahrenden Gesamtweg beruht. Dieser Kostenwert kann nach Verstreichen eines Zeitfensters von beispielsweise von 5 Sekunden verglichen werden. Die Fördereinheiten, welche über die beiden kleinsten Kostenwerte verfügen, wird der neue Förderauftrag zugewiesen.

In einer weiteren vorteilhaften Ausführung kann der Kostenprüfschritt auch zur Entscheidung über die Wartungszeitpunkte beitragen. Unter Berücksichtigung einer Mindestmenge an vorhandenen Fördereinheiten kann ebenfalls ein Kostenwert mit Informationen über den Verschleißzustand einzelner Komponenten errechnet werden. Beispielsweise handelt es sich dabei um einen Grad des Verschleißes einer oder mehreren Bodenrollen. Durch die erfinderische Berücksichtigung des Verschleißes kann somit das Fördersystem eigenständig die zu wartenden Fördereinheiten bestimmen und zeitgleich eine hohe Bereitschaft des Fördersystems gewährleisten.

In einer vorteilhaften Ausführung der Erfindung spielt die Informationskompaktheit, sowie seine Informations-Vollständigkeit eine große Rolle. Für die Gewährleistung der Kompaktheit ist dabei eine folgende, beispielhafte Struktur denkbar. Jede Struktur kann dabei für seine spezifische Funktion innerhalb der funktionalen Gleichstellung individuell angepasst werden.

In besonders vorteilhafter Ausführung überprüft jede Fördereinheit vor dem Verfügung stellen einer Information und/oder Empfangen einer Information auf seine Vollständigkeit seines Datentyps.

In beispielhafter Ausführung umfasst eine Datenstruktur eine Zeitstempel, einen Zeitraum, über welchen die Informationen übertragen wird, einen sogenannter Headerinformation, welchen den Informationsgehalt und/oder Typ festlegt. Eine Headerinformation kann dabei beispielsweise als Hashtag definiert sein, auf welchem die Fördereinrichtungsnummer und beispielsweise der Typ der Information folgt. Im Anschluss an den Header könnte beispielsweise Zahlen der eigentlichen Information folgen.

Bei einer Weiterentwicklung kann die Steuerlogik einen Informationsprüfschritt umfassen, welcher ebenfalls zur funktionalen Gleichstellung der Fördereinheiten beitragen kann. Bei dem Informationsprüfschritt handelt es sich um eine Entscheidungslogik, welche auf jeder Fördereinheit funktional gleich hinterlegt ist. Jede Fördereinheit errechnet somit bei identischen erfassten Daten einen identischen Gütewert.

In optimaler Ausführung tragen beide Fördereinheiten gleichermaßen zur Genauigkeit der Fördereinrichtung bei. Beispielsweise, wenn der Gütewert bei beiden Fördereinheiten ungefähr, bestenfalls exakt gleich, mindestens aber nahezu gleich ist, tragen bei Fördereinheiten gleichwertig zur Fördereinrichtungsgenauigkeit bei. Der Gütewert kann als nahezu gleich angesehen werden, wenn beide Werte relativ nicht mehr als 10% voneinander abweichen.

In einer beispielhaften Kolonnenfahrt (Fördereinheitsflotte), welche aus drei Fördereinheiten besteht, kann es sein, dass die Verarbeitung der erfassten Informationen mit einer unterschiedlichen Gewichtung, nämlich auf Basis der des Gütewertes, erfolgt. In diesem besonderen Fall ist es derart ausgeprägt, dass die mittlere Fördereinheit aufgrund der vorrausfahrenden und der hinterherfahrenden Fördereinheit in Ihrer Sicht vom Erfassungsbereich eingeschränkt ist. Somit ist die Güte der erfassten Daten der mittleren Fördereinheit begrenzt, in manchem Fall sogar gar nicht zur Erhöhung der Gesamtgenauigkeit förderlich. Somit erscheint es besonders sinnvoll, die funktionale Gleichstellung derart zu fördern, dass jede Fördereinheit eigenständig und unabhängig voneinander, aufgrund der gesamten zur Verfügung gestellten Informationen im Kommunikationskanal zur der Fördereinheitskolonne, Kenntnis über die alle verfügbaren Daten, sowie deren Gütewert hat. Mit diesen Informationen kann jede Fördereinheit, abhängig von ihrer Position innerhalb der Förderkolonnen, eigenständig seine Fahrparameter anpassen und/oder adaptieren. Somit kann beispielsweise, wenn die mittlere Fördereinheit eine sehr niedrige Gütewert hat und folglich "blind" ist, auf die anderen Informationen zugreifen und beispielsweise, in einer sehr fortgeschritten Ausführung der Erfindung die Steuerungsparameter von der vorrausfahrenden Fördereinrichtung direkt übernehmen.

In einer beispielhaften LKW-Beladungsszenario wird ein LKW derart beladen, dass mehrere Kolonnenfahrten, bis maximal 3 Kolonnen nebeneinander in verschiedener Kolonnenlängen, jedoch mindestens mit einer Länge von 2 Fördervorrichtungen, für die Beladung des LKWs zuständig sind. Ein solcher Transportprozess ist nachfolgend Blocktransport genannt, welcher durch ein Fördereinheitsblock ausgeführt wird. Ein Fördereinheitsblock besteht dabei mindestens aus 2 nebeneinanderfahrenden Fördereinheitskolonnen. In minimaler Form besteht somit der Fördereinheitsblock aus 4 Fördereinrichtungen in einer 2x2 Formation. Während des Einfahrtprozesses kann dabei, sich eine in der zwischen zwei anderen Fördereinheit befindlichen mittlere Fördereinrichtung über einen schlechten Gütewert verfügen. In dem beispielhaften Szenario wird jedoch ebenfalls die vorrausfahrende Fördereinheit, spätestens wenn die Fördervorrichtungskolonne am Ende des LKWs angekommen ist, ebenfalls über einen sehr schlechten Gütewert verfügen. Das Sichtfeld ist komplett eingeschränkt und die Fördereinheit ist nun vollkommen "blind". Bei Ausführung des Informationsprüfschritts kann nun ebenfalls, dank der gesamten Informationen des Fördereinheitsblocks, auf die Daten mit einem hohen Gütewert zugegriffen werden und in beispielhafter Ausführung zur verbesserten Steuerung der eigenen Fördereinheit verwendet werden. Die Daten mit einem schlechteren Gütewert können, müssen jedoch nicht, vernachlässigt werden.

In weiteren beispielhaften Ausführungen des Informationsprüfschritts können zwei eigenständige und unabhängige Fördereinheiten aneinander vorbeifahren. Sofern sie in dem Zustand eines hohen Gütewerts sind, sind beispielsweise alle Informationen innerhalb der jeweiligen Fördereinrichtung von gleicher Qualität. Im nächsten Schritt, wenn die beiden Fördereinheiten aneinander vorbeifahren, schränken Sie sich gegenseitig in Ihrer Erfassungssicht ein. Insbesondere können im Zeitraum des Vorbeifahrens die Innenliegenden Fördereinheiten begrenzt die Umgebung erfassen. In diesem Prozess sinkt dynamisch während der Bewegung der Gütewert. Durch die geringere Berücksichtigung von Daten mit einem geringeren Gütewert steigt, die Genauigkeit des Fördereinrichtung, sodass diese der Soll-Kurve optimal folgen kann.

In weiteren beispielhaften Ausführungen kann es zu einem Fördereinheitsblock innerhalb einer Halle kommen. Dieser Fördereinheitsblock hat den Vorteil besonders platzsparend diverse Paletten gleichzeitig zu transportieren. Der Abstand zwischen den einzelnen Fördervorrichtungen, welche in beispielsweiser Ausführung jeweils einen beladenen oder unbeladenen Ladungsträger mit sich führen, verringert sich im Vergleich zu den sonstigen Sicherheitsabständen. In beispielsweise Ausführungen kann dieser kleiner als 1m, in besonders vorteilhafter Ausführung um die 0,3m betragen. Dieser Abstand kann zu jeder umliegenden Einheit eingehalten werden. Innerhalb dieses Fördereinheitsblocks kann es unter Berücksichtigung der erfinderischen funktionalen Gleichstellung kommen, dass die in der Mitte befindliche Fördereinheit lediglich Daten mit geringer Gütewert erfasst. In vorteilhafter Ausführung kann die Fördereinheit nun die Fahrparameter, beispielsweise Richtung und Geschwindigkeit, der umliegenden Fördereinheiten kombinieren und zur eigenen Steuerung verwenden. Hierfür umfasst die Steuerlogik jeder Fördereinheit vorteilhafterweise einen Bewegungsadaptionsschritt, welcher bewirkt, dass die Steuereinheit die jeweilige Fördereinheit derart steuert, dass sich die Fördereinheit sich analog zu den anderen Fördereinheiten bewegt. In diesem beschriebenen Ausführungsbeispiel kommt somit die Fördereinheit eigenständig, auf Basis identischer Software, ohne direkte Zuweisung anderer Fördereinheiten auf die Entscheidung, anderen Fördereinheiten zu folgen und/oder deren Bewegungen analog und angepasst auf ihre jeweilige Eigenposition zu adaptieren.

Somit zeichnet sich der Informationsprüfschritt darin aus, dass unter gewissen Umständen eine Ungleichgewichtung der Datenqualität zur Anpassung von Fahrparametern kommt, auf welche das Steuerungsverfahren eigenständig und ohne externe Zuweisung schließt. Eine Vernachlässigung oder begrenzte Verarbeitung von Daten mit niedrigem Gütewert und die geschickte vorgeschlagene Verwertung kann somit zu der notwendigen Genauigkeit der Fördereinrichtung führen.

In einer weiteren Ausführungsform des Informationsprüfschritts kann dieser nicht nur auf den Fördereinheiten selbst, sondern ebenfalls auf externen Geräten hinterlegt sein. Beispielsweise ist es denkbar, dass der Informationsprüfschrittsauf statisch installierten Sensoreinheiten in der Halle zur Verfügung steht. In beispielhafter Ausführung kann die Sensoreinheit, wenn sie als optische Sensoreinheit ausgeführt ist, eine Kamera sein. Diese Kamera kann ebenfalls an eine Recheneinheit angeschlossen sein, die erfassten Daten verarbeitet und anschließend mit einem Gütewert versieht. Die Daten können dann gesammelt im Kommunikationskanal zur Verfügung gestellt werden und jede beliebige Fördereinheit kann drauf zugreifen.

Weitere Merkmale und Vorteile der Erfindung ergeben sich aus der nachfolgenden Beschreibung von Ausführungsbeispielen und anhand der Zeichnungen. Die Zeichnungen zeigen:
- Figur 1: eine perspektivische Ansicht eines ersten Ausführungsbeispiels einer Fördereinrichtung, welche vor der Einfahrt in einen Ladungsträger dargestellt ist;
- Figur 2: eine schematische Draufsicht auf eine Fördereinheit der Fördereinrichtung des ersten Ausführungsbeispiels;
- Figur 3: eine weitere Ansicht des Ausführungsbeispiels aus Figur 2;
- Figur 4: eine schematische Seitenansicht der Fördereinheit im nicht-gehobenen Zustand mit einer Detektionsebene;
- Figur 5: eine schematische Seitenansicht der Fördereinheit im gehobenen Zustand mit einer Detektionsebene;
- Figur 6: eine schematische Seitenansicht der Fördereinheit unterhalb eines Ladungsträgers, welcher sich im nicht-gehobenen Zustand befindet;
- Figur 7: eine schematische Seitenansicht der Fördereinheit unterhalb eines Ladungsträgers, welcher sich im gehobenen Zustand befindet;
- Figur 8: eine schematische Draufsicht auf das erste Ausführungsbeispiel der Fördereinrichtung mit einem Ladungsträger;
- Figur 9: eine weitere schematische Draufsicht auf die Fördereinheit;
- Figur 10: eine schematische Draufsicht auf das erste Ausführungsbeispiel der Fördereinrichtung, welche sich im Einfahrtprozess befindet;
- Figur 11: eine weitere schematische Draufsicht auf das erste Ausführungsbeispiel der Fördereinrichtung, welche sich im Einfahrtprozess befindet und bereits den Ladungsträger zum Teil unterfahren hat;
- Figur 12: eine schematische Draufsicht auf das erste Ausführungsbeispiel der Fördereinrichtung, welche einen Ladungsträger in der Draufsicht nach rechts hin transportiert;
- Figur 13: eine schematische Draufsicht auf das erste Ausführungsbeispiel der Fördereinrichtung, in welchem eine Fördereinheit eine Bremsung aufgrund einer detektierten Kollision ausgelöst hat;
- Figur 14: eine weitere schematische Draufsicht auf das erste Ausführungsbeispiel der Fördereinrichtung mit eingezeichneten Bahnkurven der Fördereinheiten;
- Figur 15: eine der Fig. 14 entsprechende, weitere Draufsicht auf das erste Ausführungsbeispiel der Fördereinrichtung mit eingezeichneten Erfassungsbereichen des Sensorsystems;
- Figur 16: eine der Fig. 15 entsprechende, weitere Draufsicht auf das erste Ausführungsbeispiel der Fördereinrichtung mit alternativer Bahnkurve;
- Figur 17: eine weitere schematische Draufsicht auf das erste Ausführungsbeispiel der Fördereinrichtung, welche sich senkrecht zur Längsachse der Fördereinheiten bewegen möchte;
- Figur 18: eine weitere schematische Draufsicht auf das erste Ausführungsbeispiel der Fördereinrichtung, in welcher sich die Fördereinrichtung, nach einem Förderstart senkrecht zur Längsachse der Fördereinheiten, dreht;
- Figur 19: eine schematische Draufsicht auf einen Wartebereich eines Fördersystems, welches mehrere Fördereinrichtungen des ersten Ausführungsbeispiels umfasst;
- Figur 20: eine schematische Draufsicht auf einen Lagerbereich, wobei eine Fördereinheit auf dem Rückweg in den Wartebereich ist;
- Figur 21: eine der Figur20 entsprechende Ansicht auf den Lagerbereich, wobei ein neuer Förderauftrag zur Wahl von zwei Fördereinheiten führt und die Bahnkurven der Fördereinheiten berechnet werden;
- Figur 22: eine der Figur 20 entsprechende Ansicht auf den Lagerbereich, wobei ein neuer Förderauftrag von zwei Fördereinheiten ausgeführt werden soll;
- Figur 23: eine der Figur 20 entsprechende Ansicht auf den Lagerbereich, wobei zwei neue Förderaufträge sich auf zwei hintereinander befindlichen Ladungsträgern bezieht und dementsprechend gemeinsam ausgeführt werden können;
- Figur 24: eine schematische Draufsicht auf ein zweites Ausführungsbeispiel der Fördereinrichtung.

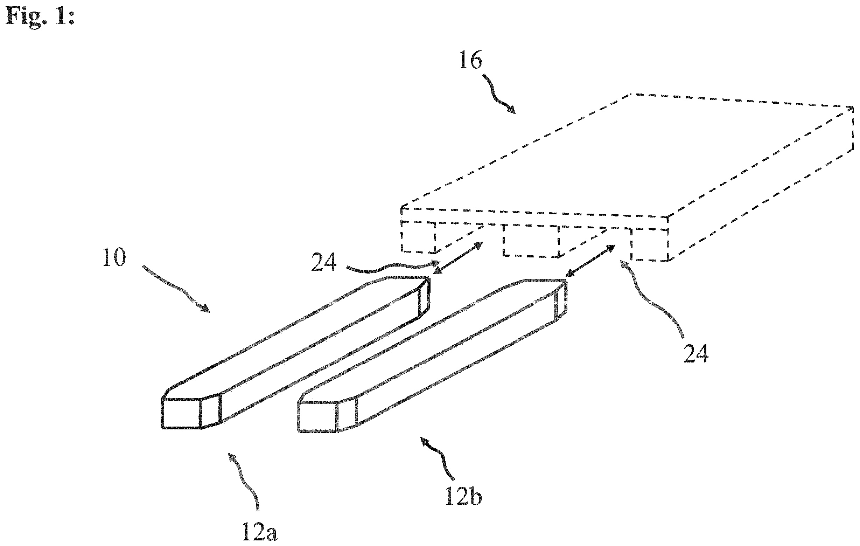

Fig. 1 zeigt eine Fördereinrichtung (10), bestehend aus zwei unabhängigen Fördereinheiten (12). Beide Fördereinheiten (12) fahren unter den Freilichtraum (24) des Ladungsträgers (16), welcher in diesem Fall in Form einer Palette dargestellt ist. Jede Fördereinheit (12) der Fördereinrichtung (10) kann den Ladungsträger (16) durch eine Hub-/Senkeinrichtung anheben und den Ladungsträger (16) im angehobenen Zustand zu einem Zielort verfahren.

Die nicht dargestellte Hub-/Senkeinheit ist für das Anheben und Absenken eines Tragelementes vorgesehen und kann unabhängig vom Antriebssystem der jeweiligen Fördereinheit (12) arbeiten. Es ist denkbar, dass das Tragelement im Querschnitt als T- Profil oder L-Profil ausgeprägt ist.

Das nicht dargestellte Antriebssystem besteht aus mindestens einem Antriebsmodul, welches mindestens eine Bodenrolle der jeweiligen Fördereinheit frei und unabhängig antreibt. Das Antriebssystem und/oder jedes Antriebsmodul kann vorteilhafterweise auch eine Lenkeinheit umfassen, mittels welcher eine Lenkbewegung der jeweiligen Fördereinheit gesteuert werden kann.

Mindestens zwei Fördereinheiten bilden eine Fördereinrichtung, wobei sich jeweils zwei beliebige Fördereinheiten zu einer Fördereinrichtung synchronisieren können.

Jede Fördereinheit (12) kann frei und unabhängig von der jeweils anderen Fördereinheit (12) verfahren. Somit kann jede Fördereinheit (12) sich eigenständig bewegen und bei einem Förderauftrag sich an einer beliebigen Stelle mit einer beliebigen anderen Fördereinheit eines Fördersystems zu einer Fördereinrichtung (10) synchronisieren.

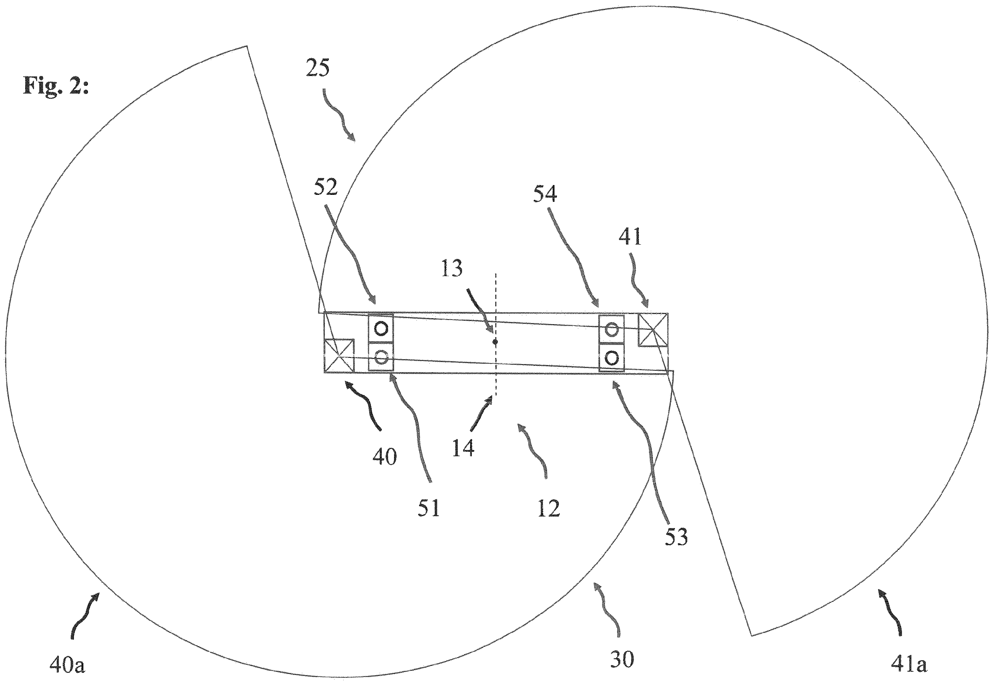

Fig. 2 zeigt die Fördereinheit (12) schematisch von oben. Eine Fördereinheit (12) besitzt im dargestellten Ausführungsbeispiel mindestens zwei Sensoreinheiten (40, 41), welche gemeinsam ein Sensorsystem (25) bilden. Die jeweiligen Detektionsbereiche der Sensoreinheiten (40, 41) sind in Fig. 2 dargestellt und durch die Bereiche (40a) und (41a) gekennzeichnet. Die überlagerten Bereiche werden von beiden Sensoreinheiten (40, 41) erfasst. Des Weiteren ist das Antriebssystem (30) eingezeichnet, welches im gezeigten Ausführungsbeispiel aus vier einzelnen Antriebseinheiten (51, 52, 53, 54) besteht. In bevorzugter Bauweise umfasst jede dieser Antriebseinheiten jeweils eine Bodenrolle, welche um eine Hochachse frei drehbar ist. Bei der Hochachse handelt es sich bevorzugt um die vertikale Mittelachse der jeweiligen Antriebseinheit (51, 52, 53, 54).

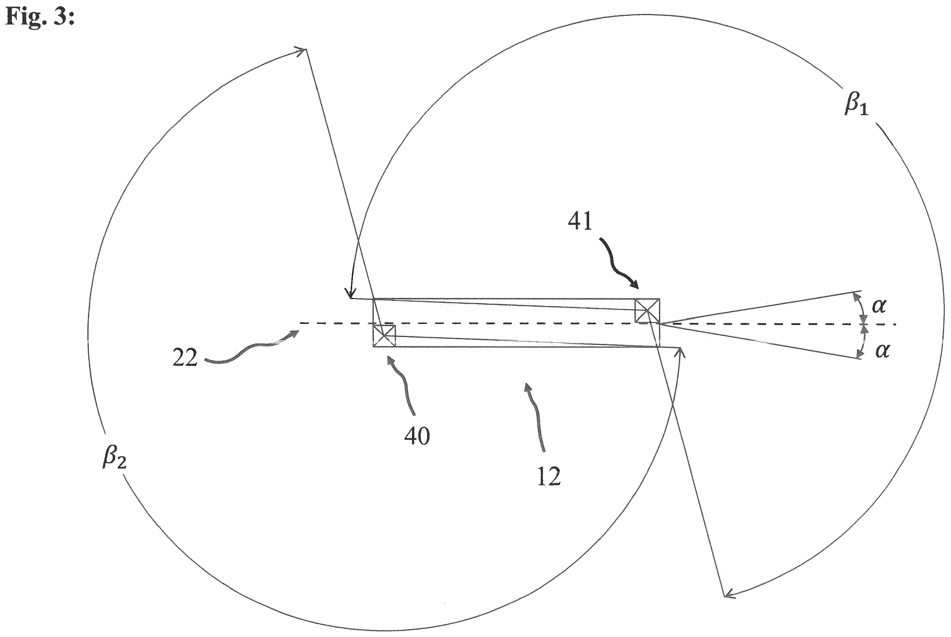

Fig. 3 zeigt die Sensoreinheiten (40, 41) des Sensorsystems (25) innerhalb der Fördereinheit (10), wobei in diesem Fall auch die Längsachse (22) der Fördereinheit (10) dargestellt ist. Der Mindestdetektionswinkel (α) ist dabei ausgehend von der Längsachse (22) eingezeichnet. Jener Mindestdetektionswinkel (α) ist bevorzugt größer 5°. Ebenso ist der Raumwinkelerfassungsbereich (β) jeder Sensoreinheit (40, 41) eingezeichnet, welcher im dargestellten Ausführungsbeispiel ca. 260° beträgt. Es ist denkbar, dass die Sensoreinheiten (40, 41) als optische Sensoreinheiten (40, 41), insbesondere als Laserscanner (40, 41) ausgebildet sind.

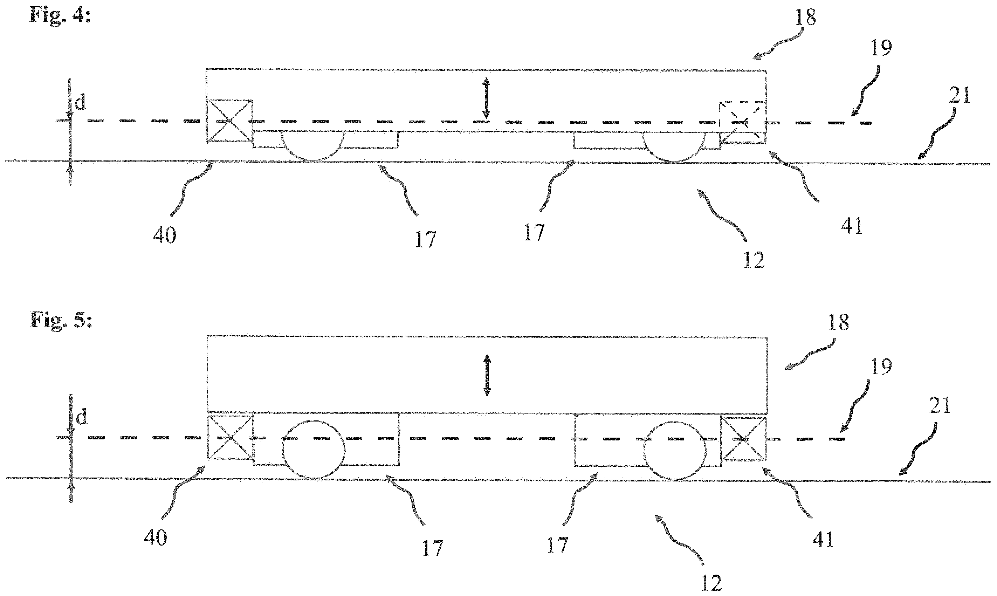

Fig. 4 zeigt die Fördereinheit (12) in der Seitenansicht im nicht-gehobenen Zustand. Der Abstand zwischen der Detektionsebene (d), die im dargestellten Ausführungsbeispiel parallel zum Boden (21) verläuft, sollte weniger als 20 cm betragen. Das Trägerelement (18) kann, durch die nicht dargestellte Hub-/Senkeinheit vertikal zum Boden (21) verfahren werden. Beispielhaft sind in Fig. 4 außerdem zwei Antriebseinheiten (17) eines Antriebssystems (30) eingezeichnet.

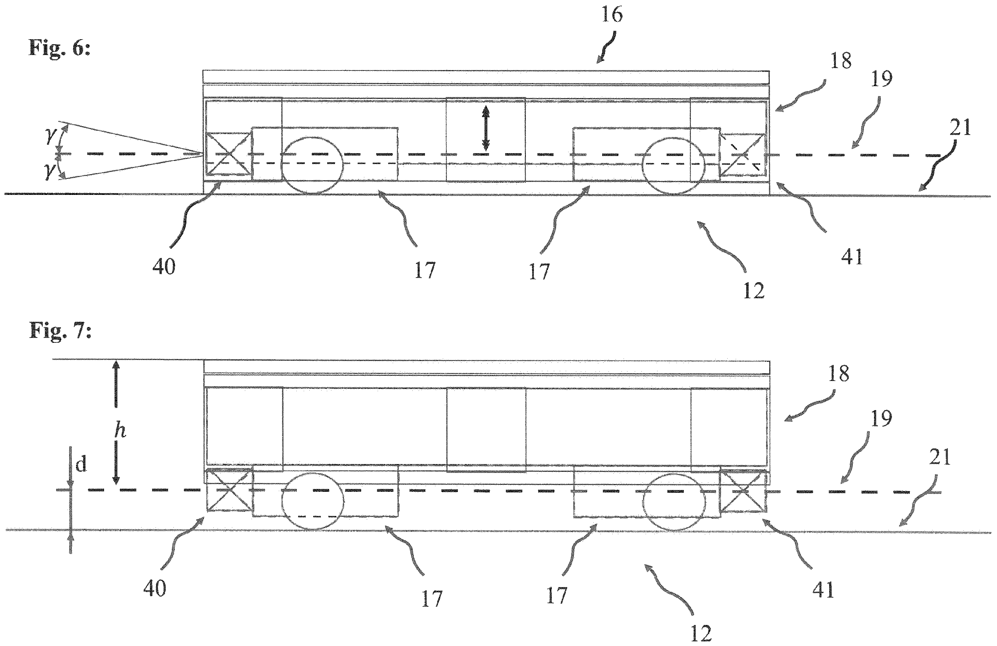

Fig. 5 zeigt die Fördereinheit (12) in der Seitenansicht im gehobenen Zustand. Im gezeigten Ausführungsbeispiel befindet sich das Tragelement (18) oberhalb der Detektionsebene (19). Fig. 6 zeigt anhand einer schematischen Seitenansicht die Fördereinheit (12), wobei diese sich im nicht-gehobenen Zustand befindet. Die Detektionslinie (19) der Sensoreinheiten (40, 41) kann, bezogen auf eine horizontale Ebene, um den Winkel (γ) bis 5° angewinkelt sein. Im dargestellten Ausführungsbeispiel beträgt der Winkel 0°. Die Detektionsebene (19) ist somit parallel zum Boden (21). In einer vorteilhaften Ausführung schneidet die Detektionslinie (19) den Ladungsträger (16) im nicht-gehobenen Zustand.

Fig. 7 zeigt eine schematische Seitenansicht die Fördereinheit (12) im gehobenen Zustand. In diesem Zustand, gegenteilig zu Figur 6, schneidet die Detektionsebene (19) den Ladungsträger nicht mehr. Die Distanz (h), zwischen der Oberkante des Ladungsträgers (16) und der Detektionsebene (19), sollte größer als 10 cm sein. Es ist dazu denkbar, dass die Sensoreinheiten (40, 41) bei einer vorteilhaften Ausführung an vertikal unbewegten Komponenten, beispielsweise dem Fahrwerk, befestigt sind.

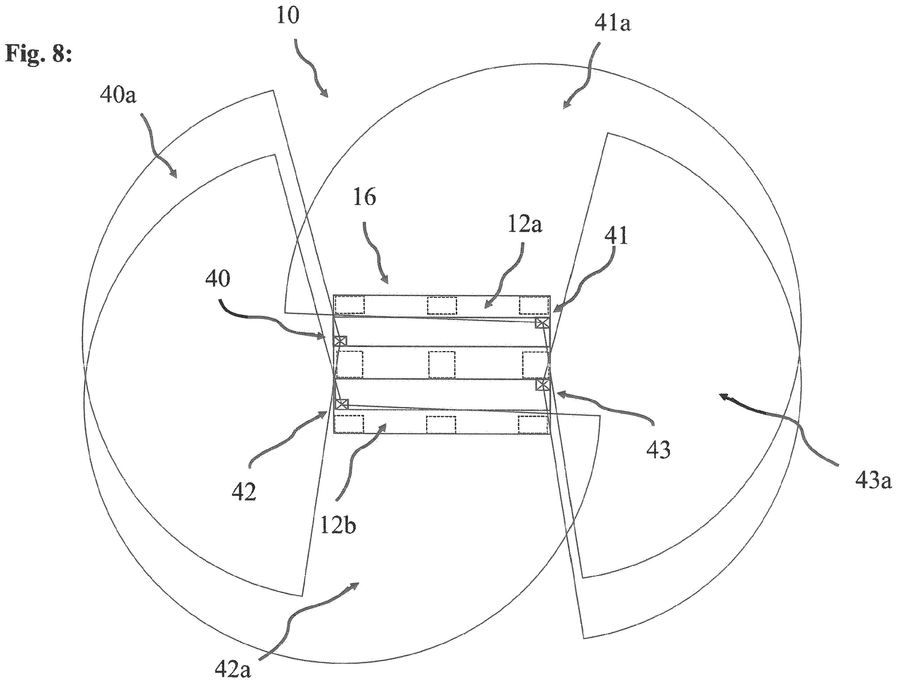

Fig. 8 zeigt eine Draufsicht auf eine Fördereinrichtung (10) mit aufgenommen Ladungsträger (16). Im dargestellten Ausführungsbeispiel ist die Fördereinrichtung (10) mit zwei Sensorsystemen (25), nämlich pro Fördereinheit (12) ein Sensorsystem (25), mit jeweils zwei Sensoreinheiten (40,41 und 42, 43) versehen. Diese Sensoreinheiten erfassen das Umfeld in den eingezeichneten Erfassungsbereichen (40a-43a). Durch die Kombination der einzelnen Erfassungsbereiche (40a-43a) ist es möglich das Umfeld in seiner Gesamtheit, also über einem Gesamterfassungsbereich von 360°, zu erfassen.

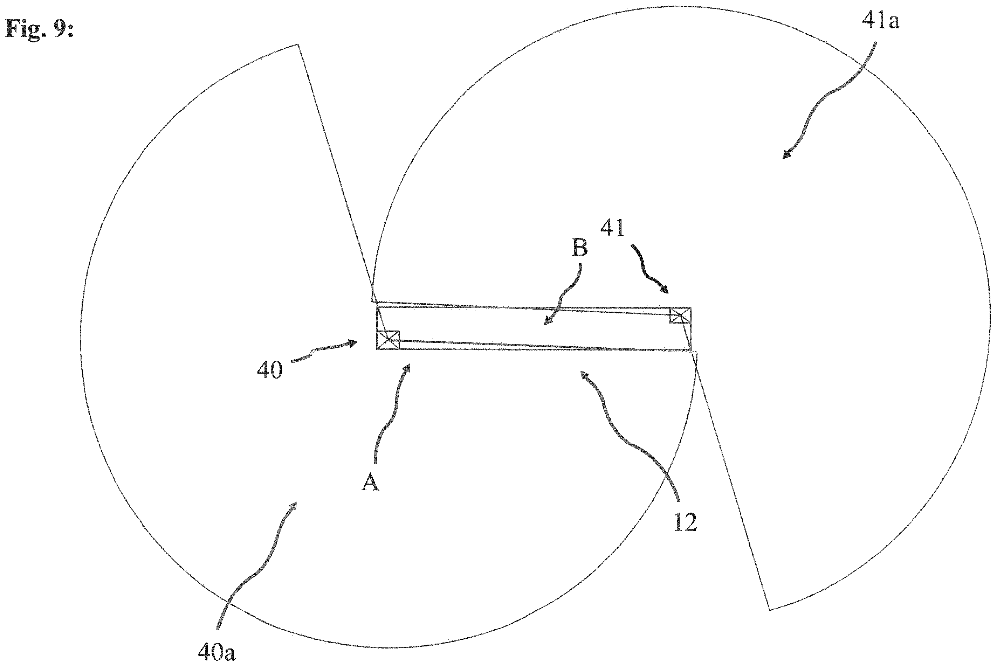

Fig. 9 zeigt eine Draufsicht auf eine Fördereinheit (12), welche zwei Sensoreinheiten (40, 41) aufweist. Dabei ist die Grundfläche (A), eine vertikal projizierte Fläche des Freilichtraums des Ladungsträgers auf den Boden, eingezeichnet. In der dargestellten Ausführung entspricht die Grundfläche der Fördereinheit (12) nahezu der Grundfläche (A) des Freilichtraums. Zudem ist die nicht-detektierte Fläche (B) eingezeichnet. Diese Fläche (B) ist von Erfassungsbereichen (40a) und (41a) eingeschlossen und in der Grundfläche A enthalten. In der beispielhaften Ausführung entspricht die Fläche (B) der Form eines Parallelogramms.

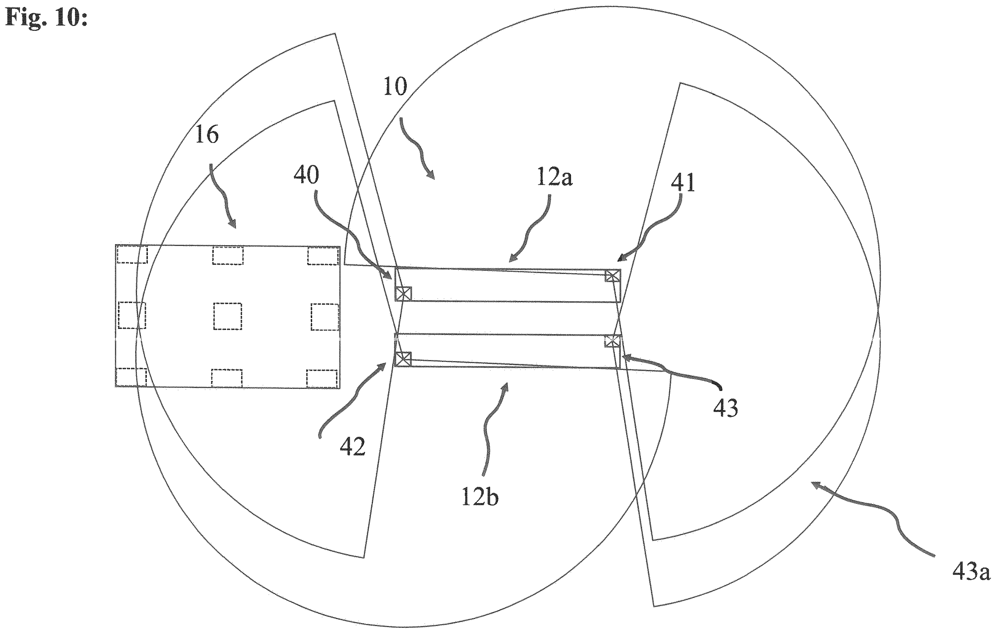

Fig. 10 zeigt eine Draufsicht auf eine Fördereinrichtung (10), welche aus zwei unabhängigen Fördereinheiten (12a, 12b) besteht und sich im Einfahrtprozess unterhalb des Ladungsträgers (16) befindet. Im Einfahrtprozess wird dabei zwischen einer der Fahrtrichtung zugewandten Seite und einer der Fahrtrichtung abgewandten Seite unterschieden. Im gezeigten Ausführungsbeispiel sind die Sensoreinheiten (40, 42) der sogenannten vorderen - der Fahrtrichtung zugewandten - Seite zugeordnet, die Sensoreinheiten (41, 43) der hinteren - der Fahrtrichtung abgewandten - Seite zugeordnet. Während des Einfahrtprozesses können die Sensoreinheiten (40, 42) jeweils einzeln, als auch kombiniert miteinander, den Ladungsträger (16) erfassen. In einer besonders vorteilhafter Ausführungsformen können Steuersysteme der Fördereinheiten (12) und/oder die Sensoreinheiten (40, 41, 42, 43) die Position und die Orientierung der jeweiligen Fördereinheit (12) relativ zum Ladungsträger (16) aus den erfassten Umgebungsparametern berechnen. In einer vorteilhaften Weiterbildung können die Sensoreinheiten (41, 43) auf der Fahrtrichtung abgewandten Seite zeitgleich zu den Sensoreinheiten (40, 42) charakteristische Merkmale der Umgebung erfassen und ermöglichen somit die Lokalisierung im Raum. Auf Basis aller erfassten Umgebungsparameter kann bestenfalls die Position der Fördereinheit im Raum, als auch ihre relative Position und Orientierung zum Ladungsträger zeitgleich ermittelt werden.

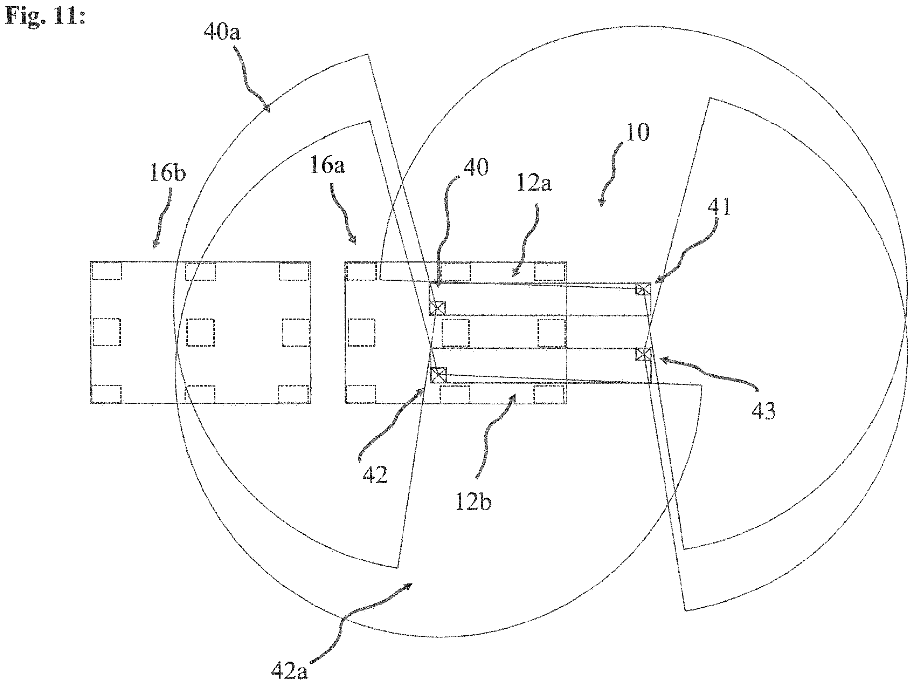

Fig. 11 zeigt eine Draufsicht auf eine Fördereinrichtung (10) der vorangegangenen Ausführungsbeispiele, welche aus zwei unabhängigen Fördereinheiten (12a, 12b) besteht und sich im Einfahrtprozess befindet, wobei sich ein Teil der Fördereinrichtung (10) schon unterhalb eines ersten Ladungsträgers (16a) geschoben hat. Im dargestellten Szenario sind zwei Ladungsträger (16b) hintereinander, mit einem gewissen Versatz, angeordnet. Sobald die Fördereinrichtung (10) beginnt den ersten Ladungsträger (16a) zu unterfahren, können die durch die Sensoreinheiten (40, 42) jeweils erfassten Umgebungsparameter derart ausgewertet werden, dass ermittelt werden kann, was auf den bereits unterfahrenen Ladungsträger (16a) folgt. In vorteilhaften Weiterbildungen kann auf Basis der durch die Sensoreinheiten (40, 42) detektierten Umgebungsparameter unterschieden werden, ob ein oder gegebenenfalls mehrere weitere Ladungsträger (16b) folgen. Im Falle des in Fig. 11 dargestellten Szenarios, würde der zweite Ladungsträger (16b) erkannt werden. In anderen Szenarien ist es aber denkbar, dass auf Basis der erfassten Umgebungsparameter auch festgestellt werden kann, wenn kein weiterer Ladungsträger folgt und/oder eine Wand bzw. ein Hindernis folgt und somit eine Weiterfahrt, wenn überhaupt, nur eingeschränkt möglich ist. Im Falle der Erkennung eines weiteren Ladungsträgers (16b) kann insbesondere erkannt werden, in welchem Abstand und in welcher Orientierung sich der folgenden Ladungsträger (16b) im Verhältnis zur eigenen Position und Orientierung der Fördereinrichtung (10) befindet.

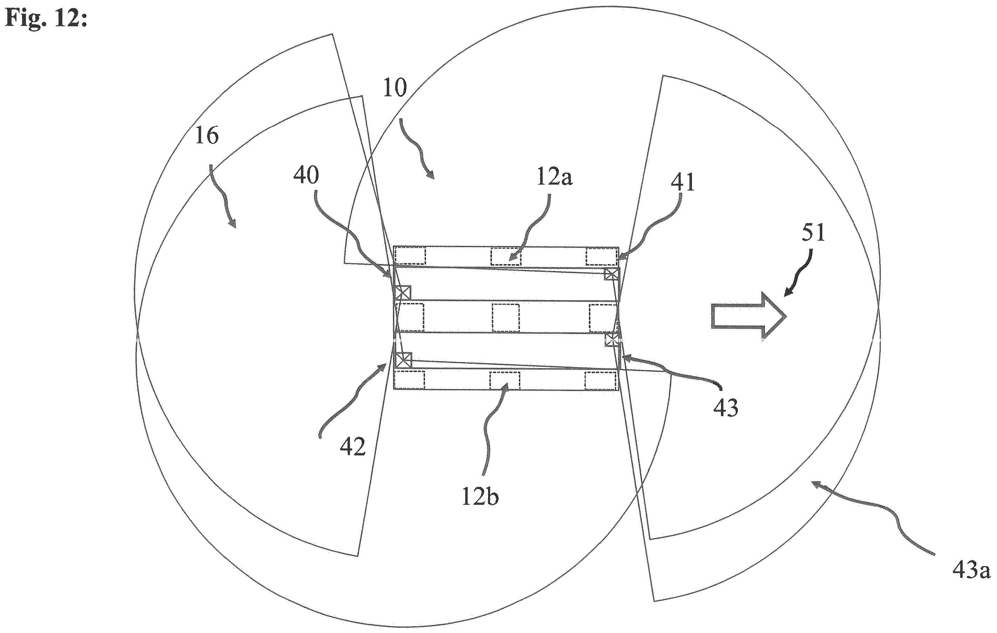

Fig. 12 zeigt eine Draufsicht auf eine Fördereinrichtung (10), welche aus zwei unabhängigen Fördereinheiten (12a, 12b) besteht und sich im Transportprozess unterhalb des Ladungsträgers (16) befindet. Die Detektionsbereiche der Sensoreinheiten (40, 41 ,42 ,43) sind derart ausgerichtet, dass sie knapp an der jeweiligen anderen Fördereinheit vorbeilaufen. Im vorliegenden Ausführungsbeispiel zeigt der Pfeil (51), welcher die Fahrtrichtung symbolisiert, nach rechts. Somit sind die Sensoreinheiten (40, 42) der Fahrtrichtung abgewandten Seite zugeordnet und sorgen für die gegenseitige Absicherung.

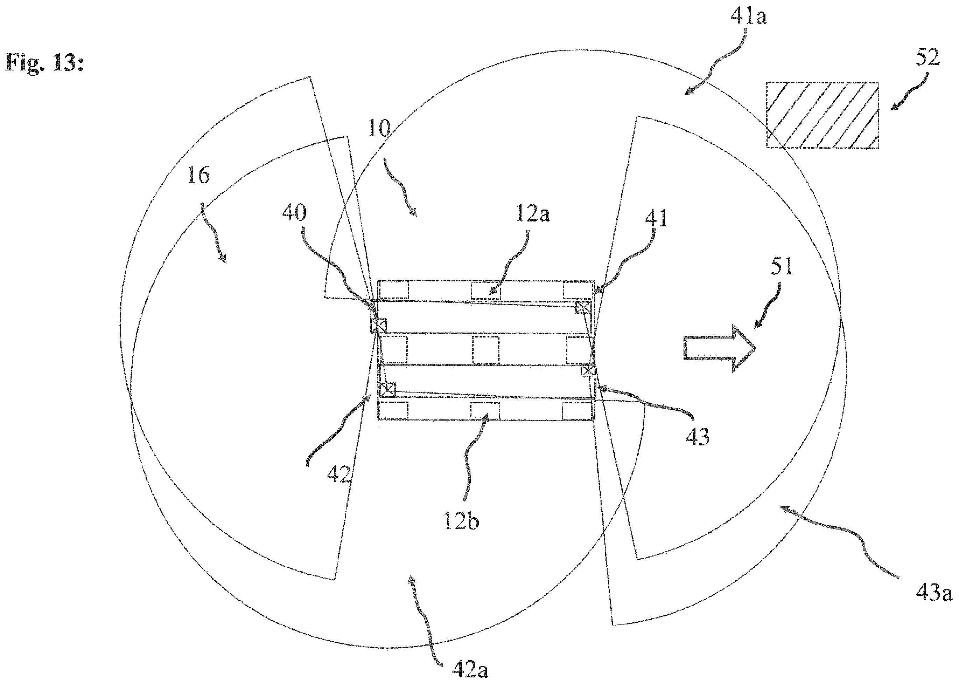

Fig. 13 zeigt eine Draufsicht auf eine Fördereinrichtung (10), wie sie bereits in Fig. 12 dargestellt ist. Die Fördereinrichtung (10) besteht aus zwei unabhängigen Fördereinheiten (12a, 12b) und befindet sich im Transportprozesses unterhalb des Ladungsträgers (16). Jedoch wurde in diesem Fall eine anstehende Kollision mit Hindernis (52) durch eine Detektionsbereichsverletzung (41a) erkannt und eine Notbremsung ausgelöst. Das Hindernis (52) soll schematisch eine Person darstellen, welche auf Kollisionsweg mit dem Fahrweg der Fördereinrichtung (16) liegt. Nach erfolgter Bremsung der ersten Fördereinheit (12a), detektiert nun die hintere Sensoreinheit (42) der zweiten Fördereinheit (12b) eine Kollision durch eine Verletzung des Detektionsbereichs (42a). Die Verletzung des Detektionsbereichs (42a) wird durch die stehende erste Fördereinheit (12a), welche sich nunmehr in Detektionsbereichs (42a) der Sensoreinheit (42) der zweiten Fördereinheit (12b) befindet, ausgelöst. Die zweite Fördereinheit (12b) löst dementsprechend ebenfalls eine Bremsung aus und kommt zum Stehen. Das Gesamtsystem wurde aufgrund einer detektierten Kollisionsgefahr zum Stillstand gebracht.

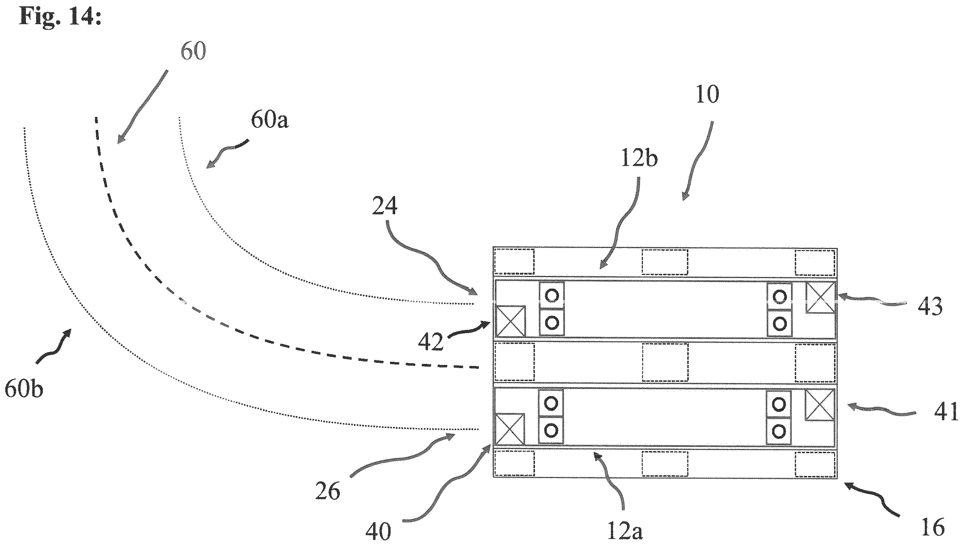

Fig. 14 zeigt die Fördereinrichtung (10) schematisch von oben. Die Fördereinrichtung (10) besteht aus zwei Fördereinheiten (12), die sich jeweils in den Freilichträumen (24, 26) unterhalb des Ladungsträgers (16) befinden. Bei einem gegeben Förderauftrag wird den beiden Fördereinheiten (12) jeweils mindestens der Zielort des Ladungsträgers (16) und die Relativposition des Ladungsträgers (16) im Raum drahtlos mitgeteilt. Anhand ihrer jeweiligen Positionen innerhalb des Ladungsträgers (16) kann jede Fördereinheit (12) die Bahnkurve (60) des Ladungsträgers (16), sowie ihre jeweilige eigene Bahnkurve (60a, 60b) berechnen. In jedem Fall ist die Bahnkurve des Ladungsträgers (16) entscheidend und kann als Master-Bahnkurve angesehen werden. Des Weiteren sind die jeweiligen Sensoreinheiten (40, 41) und (42, 43) von den jeweiligen Fördereinheiten (12) dargestellt.

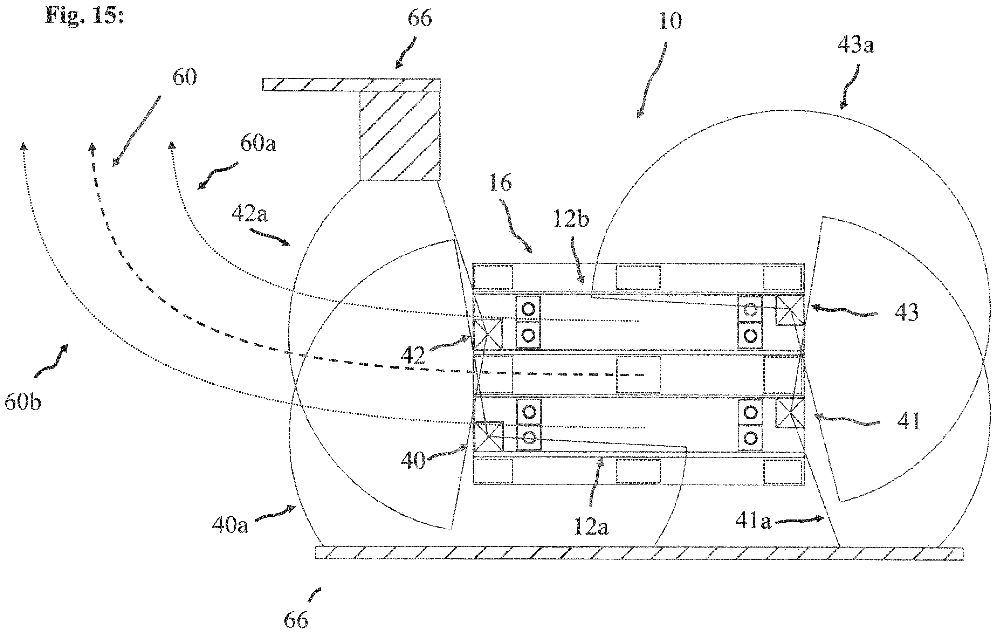

Fig. 15 entspricht einer perspektivischen Draufsicht auf die Fördereinrichtung (10), wie sie auch in Fig. 14 dargestellt ist. In dieser Darstellung ist ebenfalls die Fördereinrichtung (10) und ein Ladungsträger (16) zu sehen, welche entlang der Bahnkurve (60) verfahren möchte. Die Fördereinheiten (12a, 12b) sind mit den jeweiligen Sensoreinheiten (40, 41) und (42, 43) dargestellt, welche jeweils einen Erfassungsbereich (40a, 41a, 42a, 43a) haben. Anhand umliegender Objekte (66) kann die eigene Lage genau erfasst werden, und somit zur Positionskorrektur der jeweiligen Bahnkurve (60a, 60b) relativ zur Master-Bahnkurve (60) verwendet werden.

Eine andere vorteilhafte Ausführung wäre gegebenen, wenn die Fördereinheit (12a, 12b) sich unterhalb des Ladungsträgers (16) zusätzlich, neben der Gewichtskraft des Ladungsträgers (16) und der Ladung, kraftschlüssig verbinden und somit auch bei geringer Last auf dem Ladungsträger (16) eine starre Verbindung bewirken. Eine Relativbewegung zwischen der Fördereinrichtung (10) und dem Ladungsträger (16) wäre somit nahezu ausgeschlossen. Insbesondere könnte die kraftschlüssige Verbindung durch ein Festklemmen unterhalb des Ladungsträgers realisiert werden.

In einer besonders vorteilhaften Ausführung des Fördersystems und deren Steuerungsverfahren werden beide Methoden, zu einem das Festklemmen unterhalb des Ladungsträgers (16) zur Minimierung der Relativbewegung, zum anderen die Erfassung von Objekten (66) im Umfeld zur Ist-Positionierung, angewandt.

Bei besonders vorteilhafter Ausführung des Antriebsystems (30) sind die Bodenrollen der Fördereinheiten (12) frei drehbar. Gemäß dem bisher vorgestellten Ausführungsbeispiel der Fördereinrichtung (10) sind daher insgesamt acht Antriebseinheiten, jeweils vier Antriebseinheiten in jeder Fördereinheit (12), vorhanden.

Das Ausführungsbeispiel der Fördereinrichtung (10), kombiniert mit dem Steuerungsverfahren nach dem vierten Aspekt, ermöglicht komplexe, nicht-gradlinige Bahnkurven.

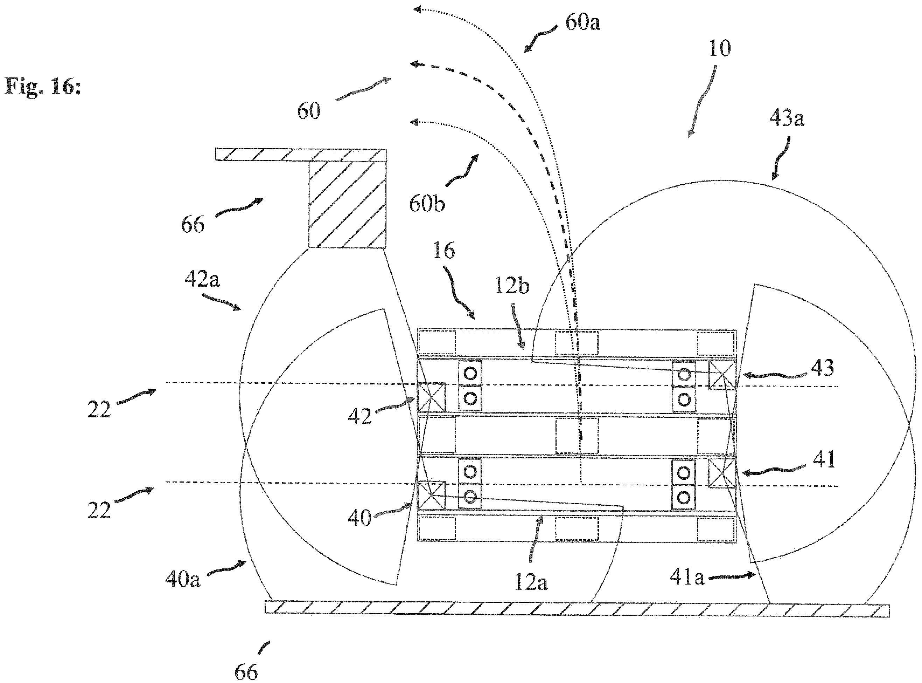

Fig. 16 entspricht einer perspektivischen Draufsicht von oben auf die Fördereinrichtung (10), wie sie auch in Fig. 15 dargestellt ist. In dieser Darstellung ist ebenfalls die Längsachse (22) jeder Fördereinheit (12a, 12b) eingezeichnet. In dieser Situation hat das Steuerungsverfahren, beispielsweise aufgrund anderer Bodenrollenausrichtungen, insbesondere jener, in welchem alle Bodenrollen senkrecht zu Längsachse (22) ausgerichtet sind, eine andere Bahnkurve (60) zum Fördern des Ladungsträgers (12) vorgegeben.

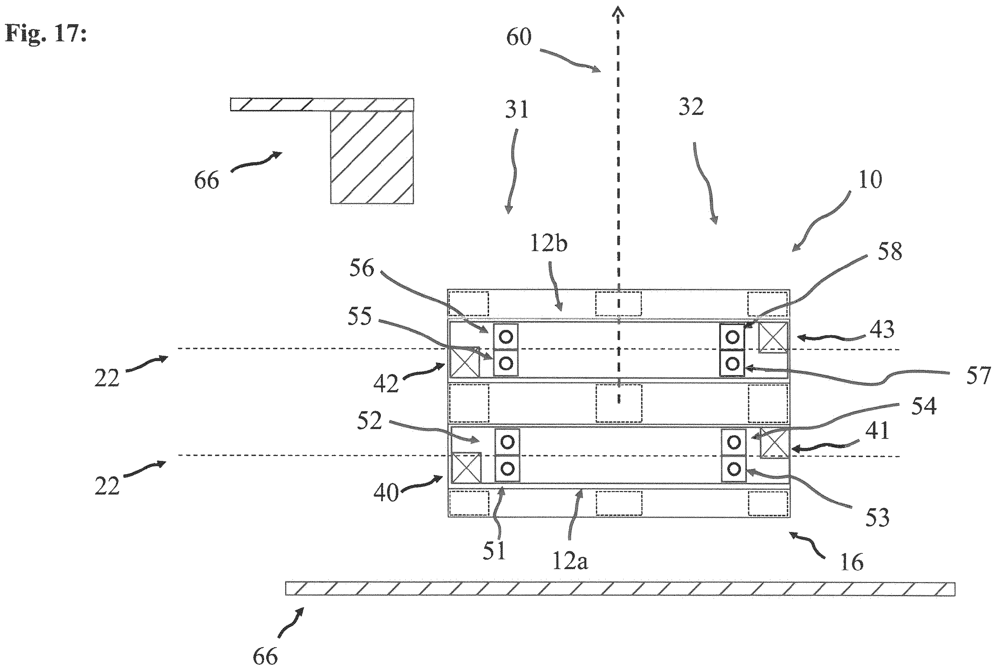

Fig. 17 zeigt eine schematische Draufsicht auf eine Fördereinrichtung (10), welche sich senkrecht zu der Längsachse (22) bewegen möchte. Da jedoch ein dauerhaftes Fördern in diese Fahrtrichtung aufgrund geringerer Kippstabilität nicht erwünscht ist, muss eine Drehung eingeleitet werden. In bekannten Steuerungsverfahren wird dies durch eine Drehung auf der Stelle gelöst. Es sind die Antriebseinheiten (51-54) der ersten Fördereinheit (12), sowie die Antriebseinheiten (55-58) der zweiten Fördereinheit (12) eingezeichnet. Zum tieferen Verständnis sind in diesem Fall die Antriebseinheiten bezogen auf die Fördereinheit (12) gruppiert. Die Antriebseinheiten (51, 52, 55, 56) bilden die, in dieser dargestellten, beispielhaften Situation, linke Antriebseite (31) der Fördereinrichtung (10), wohingegen die Antriebseinheiten (53, 54, 57, 58) die rechte Antriebsseite (32) der Fördereinrichtung (10) bilden.

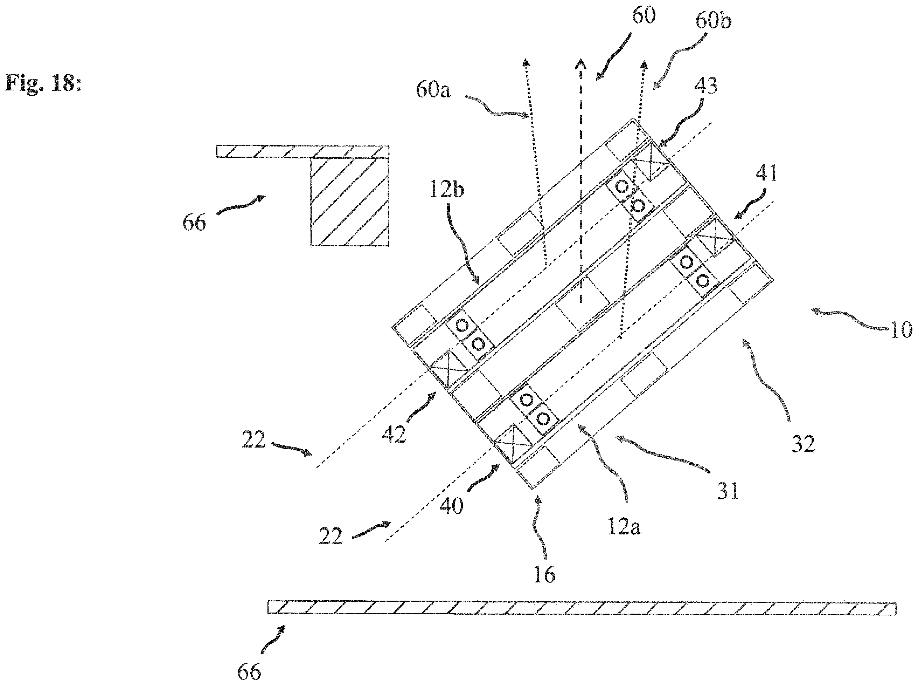

Fig. 18 zeigt eine schematische Draufsicht auf eine Fördereinrichtung (10), welche sich nun, ausgehend von der in Fig. 17 dargestellten Situation, in Bewegung befindet. Die Drehung der Fördereinheit (12) wurde derart eingeleitet, dass alle Antriebseinheiten der rechten Antriebsseite (32) eine erhöhte Raddrehzahl aufweisen, verglichen zu den Antriebseinheiten der linken Antriebsseite (31). Aufgrund der beispielhaften Drehung der Fördereinrichtung (10) lassen sich die individuellen Bahnkurven (60a) und (60b) der einzelnen Fördereinheiten (12) einzeichnen. Dies entspricht einer Überlagerung von zwei Bewegungen, namentlich einer translatorischen Bewegung und einer rotatorischen Bewegung.

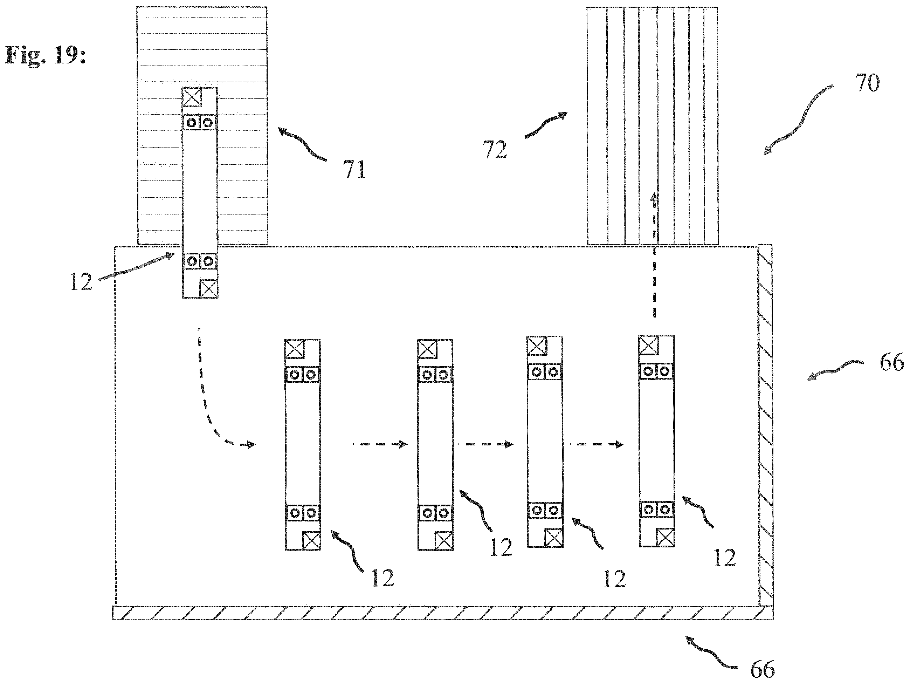

Fig. 19 zeigt eine schematische Draufsicht auf eine Wartezone (70). Die Wartezone (70) hat mindestens einen Stellplatz für eine Fördereinheit (12), bei vorteilhafter Ausführung für mehrere Fördereinheiten (12). Die Wartezone (70) ist bestenfalls umrandet von Objekten (66), die die Wartezone begrenzen. Beispielsweise könnten die Objekte (66) in Form von Barrieren ausgeprägt sein. Alternativ kann eine Wartezone (70) auch ohne jegliche Umrandung mittels Objekten (66), oder nur mit Teilumrandungen ausgebildet sein. Die Objekte (66) sind zur Begrenzung der Wartezone (70) folglich nicht zwingend erforderlich. Des Weiteren besitzt eine Wartezone (70) einen Einfahrtsbereich (71), quer schraffiert, und einen Ausfahrtsbereich (72), längs schraffiert, über welchen die Fördereinheiten (12) in die Wartezone (70) eintreten oder die Wartezone (70) verlassen können. Ferner ist denkbar, dass die Fördereinheiten (12) innerhalb der Wartezone aufgeladen werden.

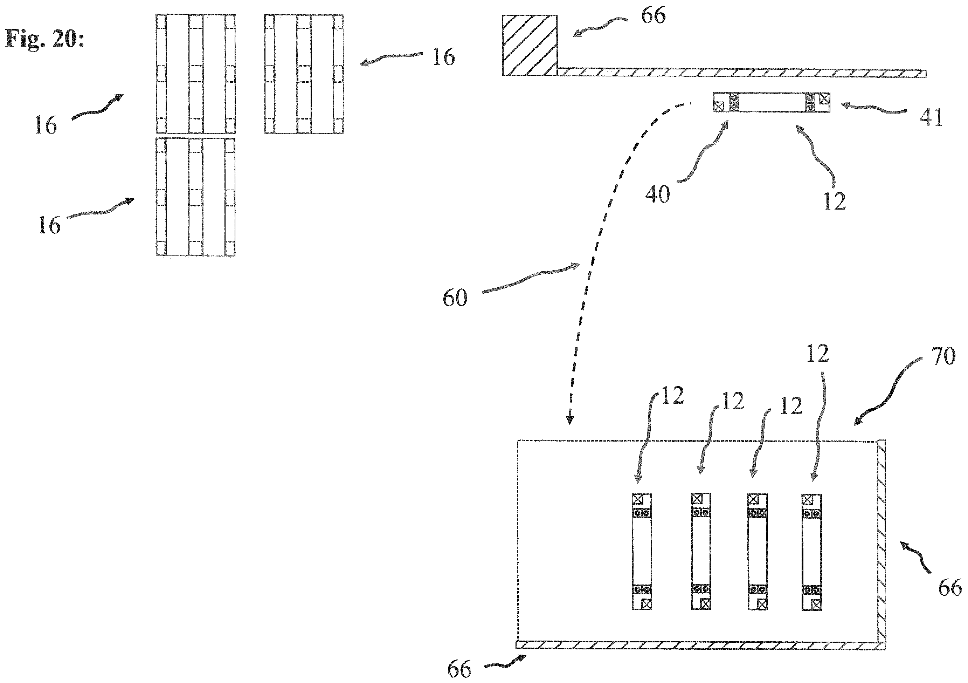

Fig. 20 zeigt eine schematische Draufsicht auf einen Lagerbereich, in welchem drei Ladungsträger (16), eine Wartezone (70) mit vier Fördereinheiten (12) und eine freie, beispielweise auf dem Rückweg befindliche, Fördereinheit (12) dargestellt sind. Die Bahnkurve (60) zeigt den geplanten Rückweg der Fördereinheit (12).

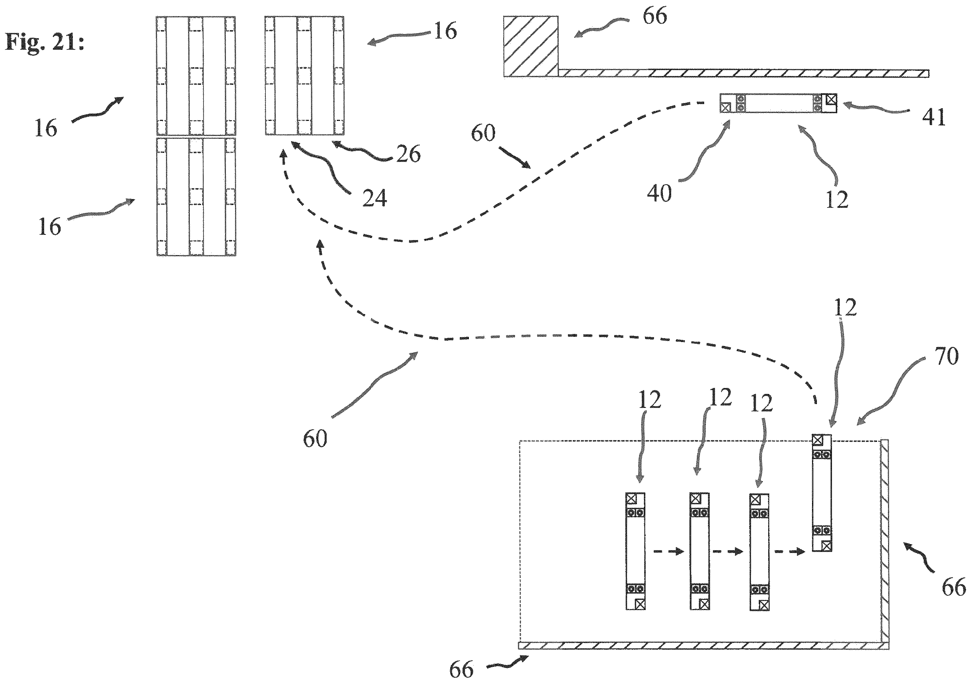

Fig. 21 zeigt ebenfalls den Lagerbereich, aus einer der in der Fig. 20 gezeigten Perspektive, bei dem nun das Fördersystem mit einem neuen Förderauftrag beauftragt worden ist. In diesem Fall wählt das Steuerungsverfahren zwei Fördereinheiten (12) aus, welche den Förderauftrag durchführen sollen. Die auf dem Rückweg befindliche Fördereinheit (12), sowie eine Fördereinheit (12) aus der Wartezone (70) werden hierfür ausgewählt. Ein weitergebildetes Steuerungsverfahren könnte allerdings aufgrund eines geringen Energiestatus der sich auf dem Rückweg befindlichen Fördereinheit (12), trotz der geringen Distanz zum Ladungsträger (16), auf deren Einsatz verzichten und zum Durchführen des Förderauftrags die ersten der beiden Fördereinheiten (12) aus der Wartezone (70) wählen. In diesem Fall würde die auf dem Rückweg befindliche Fördereinheit (12) zur Wartezone (70) zurückkehren und könnte dort aufgeladen werden.

Beide ausgewählten Fördereinheiten (12) fahren nun eigenständig in die vom Steuerungsverfahren bestimmte Förderposition in den Freileichtraum (24, 26) unter dem Ladungsträger (16). Spätestens beim Erreichen der Förderpositionen bilden die beiden Fördereinheiten (12) eine Fördereinrichtung (10).

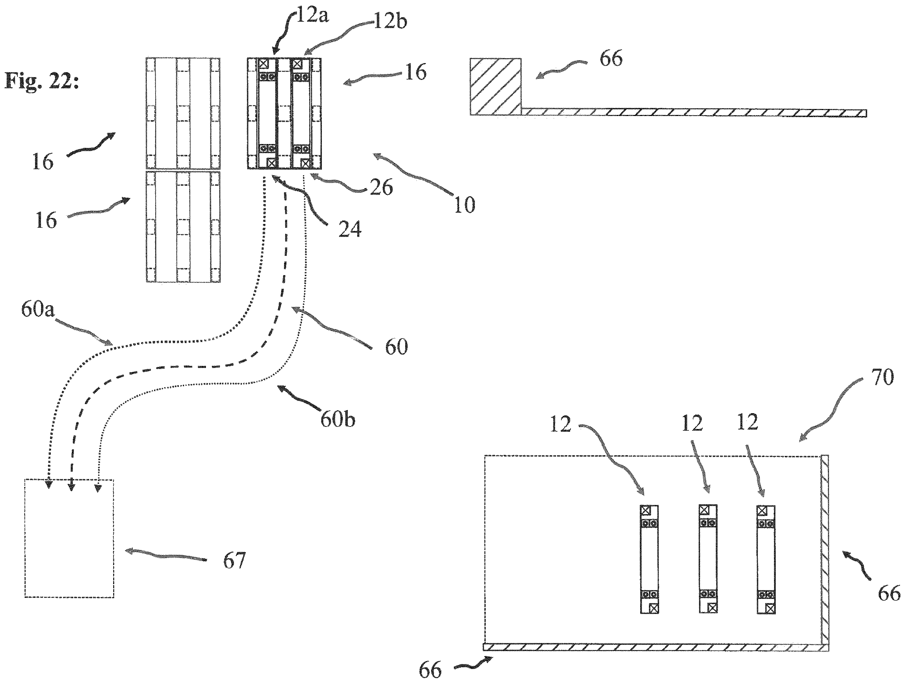

Fig. 22 zeigt ebenfalls den Lagerbereich, aus einer der in Fig. 20 gezeigten Perspektive. Die Fördereinheiten (12) befinden sich nun unterhalb des Ladungsträgers (16) und haben eine Fördereinheit (10) gebildet. Beide Fördereinheiten (12) bekommen drahtlos die Zielposition (67) des Ladungsträgers (16), sowie ihre Position innerhalb des Freilichtraumes (24, 26) vom nicht-dargestellten Steuerungsleitrechner zugeschickt, sodass nun beide Fördereinheiten (12) jeweils die eigenen Bahnkurve (60a, 60b), sowie die Bahnkurve (60) des Ladungsträgers berechnen können.

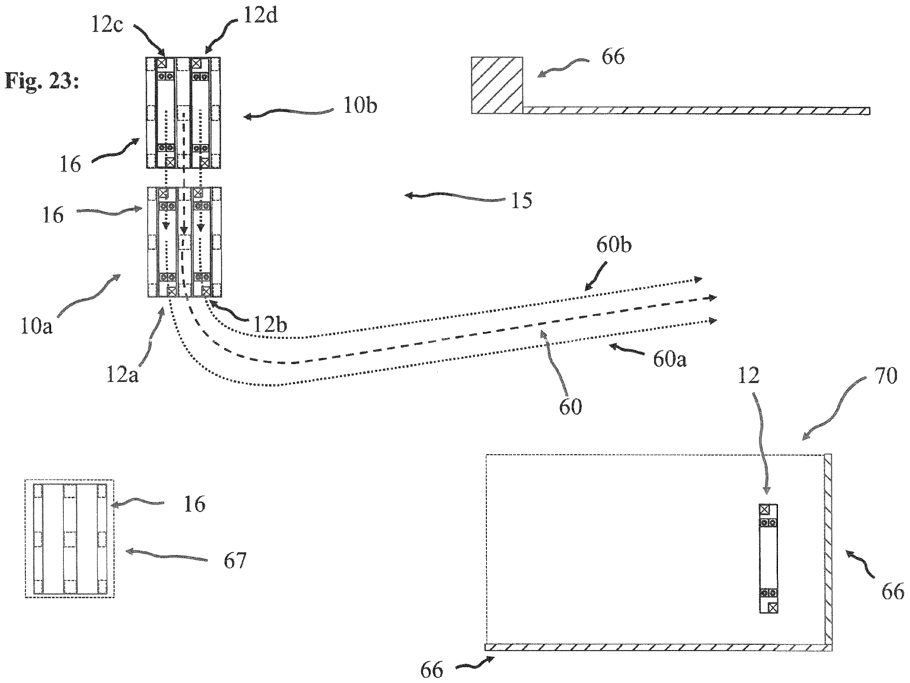

Fig. 23 zeigt ebenfalls in einer Draufsicht einen beispielhaften Lagerbereich. In der dargestellten Situation können zwei Förderaufträge derart ausgeführt werden, dass das Steuerungsverfahren die beiden Förderaufträge gemeinsam bearbeiten und eine vorteilhafte Kolonnenfahrt vorschlagen kann. In diesem Fall bilden die Fördereinrichtung (10a), bestehend aus den Fördereinheiten (12a, 12b), und die Fördereinrichtung (10b), bestehend aus den Fördereinheiten (12c, 12d), einen Förderkolonne (15). In dieser Förderkolonne (15) ist die nachfolgende Fördereinheit (10b) dazu bestrebt, der ersten, vorderen Fördereinheit (10a) auf der Bahnkurve (60) zu folgen. Bei einer vorteilhafter Ausführungsform des Steuerungsverfahrens wird dies dadurch ermöglicht, dass die Fördereinheiten (12c, 12d) der hinteren Fördereinrichtung (10b) Informationen zur besseren Folge ihrer Bahnkurven (60a) und (60b) drahtlos von Ihrer vorausfahrenden Fördereinrichtung (10a) empfangen. Das Ausführungsbeispiel des Steuerungsverfahrens würde, in der in Fig. 12 dargestellten Situation, die Fördereinheit (12a) der Fördereinheit (12c) und/oder die Fördereinheit (12b) der Fördereinheit (12d) Information zur besseren Folge der Bahnkurven (60a, 60b) zur Verfügung stellen. Diese Informationen können beispielsweise Informationen über Bodenunebenheiten und/oder stark variierende Reibwerte des Bodens sein.

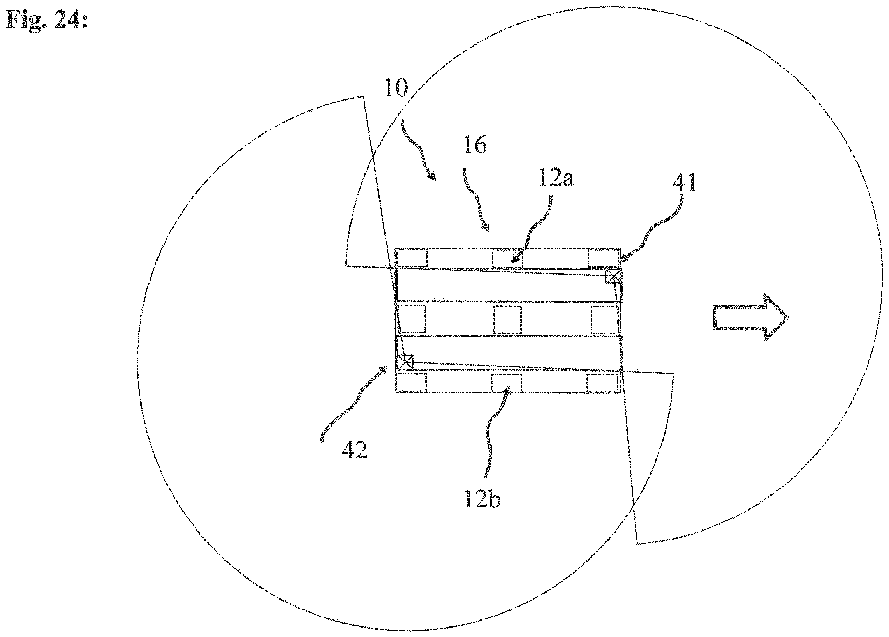

Fig. 24 zeigt eine Draufsicht auf eine Fördereinrichtung (10) gemäß eines zweiten Ausführungsbeispiels. Die Fördereinheit (10) besteht aus zwei unabhängigen Fördereinheiten (12a, 12b) und ist als kostengünstiges Ausführungsbeispiel ausgebildet. Vorteilhafterweise sind nur zwei Sensoreinheiten (41, 42) in der gesamten Fördereinrichtung (10) verbaut, nämlich eine Sensoreinheit pro Fördereinheit (12a, 12b). Die gegenseitige Absicherung erfolgt wie in der Beschreibung zu Fig. 13 erläutert. Je nach Fahrtrichtung und je nachdem welche Fördereinheit (12a, 12b) eine potentielle Kollision mit einem Hindernis detektiert, kann die Fördereinrichtung (10) sowohl durch eine aktive Detektionsbereichs als auch durch eine passive Detektionsbereichsverletzung gestoppt werden. Erkennt im dargestellten Ausführungsbeispiel die erste Fördereinheit (12a) eine potentielle Kollision mit einem Hindernis, wird sie ihre Geschwindigkeit reduzieren, oder einen ein Not-Stopp durchführen. Dies hat zur Folge, dass die erste Fördereinheit (12a) in den Erfassungsbereich der Sensoreinheit (42) der noch fahrenden zweiten Fördereinheit (12b) eindringt und dort zu einer aktiven Detektionsbereichsverletzung führt. Die zweite Fördereinheit (12b) wird ihre Geschwindigkeit entsprechend der ersten Fördereinheit (12a) anpassen und/oder ebenfalls einen Not-Stopp ausführen.

Im Umgekehrten Fall, nämlich wenn die zweite Fördereinheit (12b) ihre Geschwindigkeit reduziert und/oder einen Not-Stopp ausführt, wird dies zu einer passiven Detektionsbereichsverletzung bei der ersten Fördereinheit (12a) führen. Mit anderen Worten würde die zweite Fördereinheit (12b) durch die Verzögerung den Erfassungsbereich der ersten Sensoreinheit (41) der noch fahrenden ersten Fördereinheit (12a) verlassen. Mithin würde die erste Fördereinheit (12a) ihre Geschwindigkeit ebenfalls reduzieren und/oder einen Not-Stopp ausführen. In jedem Fall kommt die Fördereinheit (10) sicher zum Stehen.

### Bezugszeichenliste

- 10: Fördereinrichtung
- 10a: erste Fördereinrichtung
- 10b: zweite Fördereinrichtung
- 12: Fördereinheit
- 12a: erste Fördereinheit
- 12b: zweite Fördereinheit
- 16: Ladungsträger
- 17: Antriebseinheit
- 18: Tragelement
- 19: Detektionsebene
- 21: Boden
- 22: Längsachse einer Fördereinheit
- 24, 26: Freilichtraum des Ladungsträgers
- 25: Sensorsystem
- 30: Antriebssystem
- 40 - 43: Sensoreinheiten
- 40a - 43a: Erfassungsbereiche der jeweiligen Sensoreinheiten
- 51-54: Antriebseinheit
- 60: Bahnkurve der Fördereinrichtung
- 60a: Bahnkurve der ersten Fördereinheit
- 60b: Bahnkurve der zweiten Fördereinheit
- 66: Objekte
- 67: Zielposition

- α: Mindestdetektionswinkel
- β: Raumwinkelerfassungsbereich
- γ: Kippwinkel
- A: Grundfläche
- B: Fläche
- d: Abstand zwischen Boden und Detektionsebene
- h: Distanz zwischen der Oberkante des Ladungsträgers und der Detektionsebene

## Patentansprüche

1. Steuerungsverfahren für eine Fördereinrichtung (10) zum Fördern von beladenen und unbeladenen Ladungsträgern (16), welche
- eine erste Fördereinheit (12a) und eine zweite Fördereinheit (12b) aufweist, wobei
- jede Fördereinheit (12a, 12b) relativ zur jeweils anderen Fördereinheit (12a, 12b) und unabhängig von der jeweils anderen Fördereinheit (12a, 12b) entlang einer beliebigen Fahrtrichtung bewegbar ist, und
- jede Fördereinheit (12a, 12b) ein Steuersystem zur Steuerung der Bewegung der jeweiligen Fördereinheit (12a, 12b) umfasst, wobei
- das Steuersystem zur Steuerung der Bewegung der jeweiligen Fördereinheit (12a, 12b) eine Steuerlogik ausführt,
**dadurch gekennzeichnet, dass**
- die Steuersysteme der ersten und zweiten Fördereinheit (12a, 12b) die Steuerlogik dergestalt unabhängig voneinander und synchron ausführen, dass die Ausführung der Steuerlogik durch die Steuersysteme der ersten und zweiten Fördereinheit (12a, 12b) gleichzeitig und in gleicher Weise stattfindet.

2. Steuerungsverfahren nach dem vorhergehenden Anspruch, **dadurch gekennzeichnet, dass** die Steuerlogik mehrere Verfahrensschritte umfasst, wobei die Steuersysteme der ersten und zweiten Fördereinheit (12a, 12b) jeden Verfahrensschritt unabhängig voneinander und synchron ausführen.

3. Steuerungsverfahren nach einem der vorhergehenden Ansprüche, **dadurch gekennzeichnet, dass** jede Fördereinheit (12a, 12b) ein Sensorsystem (25) zur Detektion von Umgebungsparametern aufweist und die Steuerlogik einen Detektionsschritt umfasst, bei welchem Umfeldinformationen ermittelt werden, wobei die Umfeldinformationen Informationen über Hindernisse und/oder Ladungsträger (16) im Umfeld der Fördereinrichtung (10) aufweisen, insbesondere wobei die Steuerlogik einen sich dem Detektionsschritt anschließendem Güteberechnungsschritt umfasst, bei welchem Güteinformationen ermittelt werden, wobei die Güteinformationen Informationen über die Güte, insbesondere einen Gütewert, der im Detektionsschritt berechneten Umfeldinformationen umfassen.

4. Steuerungsverfahren nach einem der vorhergehenden Ansprüche, **dadurch gekennzeichnet, dass** jede Fördereinheit (12a, 12b) eine mit dem Steuersystem verbundenen Sende- und Empfangseinheit umfasst, so dass jede Fördereinheit (12a, 12b) über einen Kommunikationskanal eines Netzwerks Informationen versenden und empfangen kann, insbesondere wobei die Informationen Statusinformationen der versendenden Fördereinheit (12a, 12b), insbesondere Verschleißinformationen und/oder Energiereserveinformationen der versendenden Fördereinheit (12a, 12b), sind.

5. Steuerungsverfahren nach Anspruch 4 in Kombination mit Anspruch 3, **dadurch gekennzeichnet, dass**
- die Informationen die Umfeldinformationen der versendenden Fördereinheit (12a, 12b) sind; und/oder
- die Informationen die Umfeldinformationen und die Güteinformationen der versendenden Fördereinheit (12a, 12b) umfassen.

6. Steuerungsverfahren nach Anspruch 5, **dadurch gekennzeichnet, dass** die Informationen keine Ursprungsinformationen über die versendende Fördereinheit (12a, 12b) aufweisen.

7. Steuerungsverfahren nach einem der Ansprüche 5 und 6, **dadurch gekennzeichnet, dass** die Steuerlogik einen Güteprüfschritt umfasst, wobei
- Umfeldinformationen und Güteinformationen der jeweils anderen Fördereinheit (12a, 12b) durch die Sende- und Empfangseinheit empfangen werden und mit den Umfeldinformationen und Güteinformationen der empfangenden Fördereinheit (12a, 12b) verglichen werden,
- die empfangenen Umfeldinformationen und Güteinformationen der jeweils anderen Fördereinheit (12a, 12b) mit den Umfeldinformationen und Güteinformationen der empfangenden Fördereinheit (12a, 12b) zusammengeführt werden, wenn sich dadurch der Güte der Umfeldinformationen erhöht,
- bei der Zusammenführung neue Güteinformationen ermittelt werden, wobei den Umfeldinformationen eine maximale Güte zugewiesen wird, wenn die neu ermittelte Güteinformationen eine Güte aufweisen, welcher einen fest definierten Schwellwert übersteigt,
- die zusammengeführten Umfeldinformationen mit den ermittelten Güteinformationen durch die Sende- und Empfangseinheit versendet werden.

8. Steuerungsverfahren nach Anspruch 7, **dadurch gekennzeichnet, dass** der Güteprüfungsschritt innerhalb eines festgelegten Zeitfensters ausgeführt wird.

9. Steuerungsverfahren nach einem der Ansprüche 4 bis 8, **dadurch gekennzeichnet, dass** mehrere Fördereinrichtungen (10) eine Fördersystem bilden und ein Förderauftrag, welcher Informationen über den Standort und den Zielort eines zu fördernden Ladungsträgers (16) umfasst, durch das Netzwerk zeitgleich an alle Fördereinheiten (12a, 12b) des Fördersystems versendet wird.

10. Steuerungsverfahren nach Anspruch 9, **dadurch gekennzeichnet, dass** die Steuersysteme aller Fördereinheiten (12a, 12b) des Fördersystems die Steuerlogik unabhängig voneinander und synchron ausführen.

11. Steuerungsverfahren nach Anspruch 10, **dadurch gekennzeichnet, dass** die Steuerlogik einen Kostenprüfungsschritt umfasst, bei welchem
- der Förderauftrag durch die Sende- und Empfangseinheit empfangen wird,
- auf Grundlage des Förderauftrags ein Kostenwert ermittelt wird,
- der ermittelte Kostenwert durch die Sende- und Empfangseinheit versendet wird,
- die Kostenwerte der jeweils anderen Fördereinheiten (12a, 12b) des Fördersystems durch die Sende- und Empfangseinheit empfangen werden,
- die Kostenwerte der jeweils anderen Fördereinheiten (12a, 12b) mit dem zuvor ermittelten Kostenwert verglichen werden, und
- wenn der zuvor ermittelte Kostenwert den kleinsten, oder zweitkleinsten Kostenwert bildet, das Steuersystem die Bewegung der Fördereinheit (12a, 12b) derart steuert, dass der Ladungsträger (16) durch die Fördereinheit (12a, 12b) gefördert wird.

12. Steuerungsverfahren nach Anspruch 11, **dadurch gekennzeichnet, dass** Kostenprüfungsschritt innerhalb eines festgelegten Zeitfensters ausgeführt wird.

13. Steuerungsverfahren nach einem der Ansprüche 3 bis 12, **dadurch gekennzeichnet, dass** mehrere hintereinander herfahrende Fördereinrichtungen (10) eine Fördereinheitsflotte bilden und die Steuerlogik einen Informationsprüfschritt umfasst, wobei beim Informationsprüfschritt die ermittelte Güte der Umfeldinformationen mit der Güte in den Güteinformationen der jeweils anderen Fördereinheiten (12a, 12b) der Fördereinheitsflotte verglichen werden und, bei Überschreiten eines festgelegten Differenzwertes, die eigenen Umfeldinformationen verworfen werden und zur weiteren Steuerung der Fördereinheit (12a, 12b) die Umfeldinformationen der jeweils anderen Fördereinheiten (12a, 12b) der Fördereinheitsflotte verwendet werden.

14. Steuerungsverfahren nach Anspruch 1 in Kombination mit Anspruch 4 **dadurch gekennzeichnet, dass** die Steuerlogik einen Bewegungsadaptionsschritt umfasst, bei welchem
- Steuerparameter der jeweils anderen Fördereinheit, insbesondere der zweiten Fördereinheit (12b), durch die Sende- und Empfangseinheit empfangen werden, und
- die Steuerparameter der jeweils andern Fördereinheit, insbesondere der zweiten Fördereinheit (12b), zur Steuerung der Bewegung der jeweiligen Fördereinheit, insbesondere der ersten Fördereinheit (12a), verwendet werden.

15. Fördereinrichtung (10) zum Fördern von beladenen und unbeladenen Ladungsträgern (16), wobei die Fördereinrichtung
- eine erste Fördereinheit (12a) und eine zweite Fördereinheit (12b) aufweist, wobei
- jede Fördereinheit (12a, 12b) relativ zur jeweils anderen Fördereinheit (12a, 12b) und unabhängig von der jeweils anderen Fördereinheit (12a, 12b) entlang einer beliebigen Fahrtrichtung bewegbar ist, und
- jede Fördereinheit (12a, 12b) ein Steuersystem zur Steuerung der Bewegung der jeweiligen Fördereinheit (12a, 12b) umfasst, wobei
- das Steuersystem zur Steuerung der Bewegung der jeweiligen Fördereinheit (12a, 12b) eine Steuerlogik ausführt,
**dadurch gekennzeichnet, dass**
- die Steuersysteme der ersten und zweiten Fördereinheit (12a, 12b) die Steuerlogik dergestalt unabhängig voneinander und synchron ausführen, dass die Ausführung der Steuerlogik durch die Steuersysteme der ersten und zweiten Fördereinheit (12a, 12b) gleichzeitig und in gleicher Weise stattfindet.

## Claims

1. Control method for a conveying device (10) for conveying charged and uncharged charge carriers (16), which
- has a first conveying unit (12a) and a second conveying unit (12b), wherein
- each conveying unit (12a, 12b) can be moved relative to the respective other conveying unit (12a, 12b) and independently of the respective other conveying unit (12a, 12b) in any direction of travel, and
- each conveying unit (12a, 12b) comprises a control system for controlling the movement of the respective conveying unit (12a, 12b), wherein
- the control system for controlling the movement of the respective conveying unit (12a, 12b) carries out a control logic,
**characterised in that**
- the control systems of the first and second conveying unit (12a, 12b) carry out the control logic independently of each other and synchronously in such a way that carrying out the control logic takes place by means of the control systems of the first and second conveying unit (12a, 12b) at the same time and in the same manner.

2. Control method according to the preceding claim, **characterised in that** the control logic comprises several method steps, wherein the control systems of the first and second conveying unit (12a, 12b) carry out each method step independently of each other and synchronously.

3. Control method according to one of the preceding claims, **characterised in that** each conveying unit (12a, 12b) has a sensor system (25) for detecting surroundings parameters, and the control logic comprises a detection step, in which surroundings information is ascertained, wherein the surroundings information has information about obstacles and/or charge carriers (16) in the surroundings of the conveying device (10), in particular wherein the control logic comprises a quality calculation step following the detection step, in which quality information is ascertained, wherein the quality information comprises information about the quality, in particular a quality value, of the surroundings information calculated in the detection step.

4. Control device according to one of the preceding claims, **characterised in that** each conveying unit (12a, 12b) comprises a transmission and reception unit connected to the control system, such that each conveying unit (12a, 12b) can send and receive information about a communication channel of a network, in particular wherein the information is status information of the sent conveying unit (12a, 12b), in particular wear information and/or energy server information of the sent conveying unit (12a, 12b).

5. Control method according to claim 4 in combination with claim 3, **characterised in that**
- the information is the surroundings information of the sent conveying unit (12a, 12b); and/or
- the information comprises the surroundings information and the quality information of the sent conveying unit (12a, 12b).

6. Control method according to claim 5, **characterised in that** the information does not have any source information about the sent conveying unit (12a, 12b).

7. Control method according to one of claims 5 and 6, **characterised in that** the control logic comprises a quality checking step, wherein
- surroundings information and quality information of the respective other conveying unit (12a, 12b) are received by the transmission and reception unit and are compared to the surroundings information and quality information of the receiving conveying unit (12a, 12b),
- the received surroundings information and quality information of the respective other conveying unit (12a, 12b) are combined with the surroundings information and quality information of the received conveying unit (12a, 12b) when the quality of the surroundings information is increased in this way,
- during the combination, new quality information is ascertained, wherein a maximum quality is allocated to the surroundings information when the newly ascertained quality information has a quality that exceeds a fixedly defined threshold value,
- the combined surroundings information is sent with the ascertained quality information by the transmission and reception unit.

8. Control method according to claim 7, **characterised in that** the quality checking step is carried out within a set window of time.

9. Control method according to one of claims 4 to 8, **characterised in that** several conveying devices (10) form a conveying system, and a conveying order, which comprises information about the location and the destination of a charge carrier (16) to be conveyed, is sent by the network to all conveying units (12a, 12b) of the conveying system at the same time.

10. Control method according to claim 9, **characterised in that** the control systems of all conveying units (12a, 12b) of the conveying system carry out the control logic independently of each other and synchronously.

11. Control method according to claim 10, **characterised in that** the control logic comprises a cost checking step, in which
- the conveying order is received by the transmission and reception unit,
- a cost value is ascertained based on the conveying order,
- the ascertained cost value is sent by the transmission and reception unit,
- the cost values of the respective other conveying units (12a, 12b) of the conveying system are received by the transmission and reception unit,
- the cost values of the respective other conveying units (12a, 12b) are compared to the previously ascertained cost value, and
- when the previously ascertained cost value forms the smallest or second smallest cost value, the control system controls the movement of the conveying unit (12a, 12b) in such a way that the charge carrier (16) is conveyed by the conveying unknit (12a, 12b).

12. Control method according to claim 11, **characterised in that** the cost checking step is carried out within a set window of time.

13. Control method according to one of claims 3 to 12, **characterised in that** several conveying devices (10) travelling one behind the other form a conveying unit fleet, and the control logic comprises an information checking step, wherein, in the information checking step, the ascertained quality of the surroundings information is compared to the quality in the quality information of the respective other conveying units (12a, 12b) of the conveying unit fleet and, upon exceeding a set difference value, the individual pieces of surroundings information are discarded and, for the further control of the conveying unit (12a, 12b), the surroundings information of the respective other conveying units (12a, 12b) of the conveying unit fleet are used.

14. Control method according to claim 1 in combination with claim 4, **characterised in that** the control logic comprises a movement adaptation step, in which
- control parameters of the respective other conveying unit, in particular the second conveying unit (12b), are received by the transmission and reception unit, and
- the control parameters of the respective other conveying unit, in particular the second conveying unit (12b), are used for controlling the movement of the respective conveying unit, in particular the first conveying unit (12a).

15. Conveying device (10) for conveying charged and uncharged charge carriers (16), wherein the conveying device
- has a first conveying unit (12a) and a second conveying unit (12b), wherein
- each conveying unit (12a, 12b) can be moved relative to the respective other conveying unit (12a, 12b) and independently of the respective other conveying unit (12a, 12b) in any direction of travel, and
- each conveying unit (12a, 12b) comprises a control system for controlling the movement of the respective conveying unit (12a, 12b), wherein
- the control system for controlling the movement of the respective conveying unit (12a, 12b) carries out a control logic,
**characterised in that**
- the control systems of the first and second conveying unit (12a, 12b) carry out the control logic independently of each other and synchronously in such a way that carrying out the control logic takes place by means of the control systems of the first and second conveying unit (12a, 12b) at the same time and in the same manner.

## Revendications

1. Procédé de commande d'un dispositif de transport (10) destiné à transporter des supports de charge (16) chargés et non chargés,
- lequel dispositif comporte une première unité de transport (12a) et une deuxième unité de transport (12b) ;
- chaque unité de transport (12a, 12b) étant mobile par rapport à l'autre unité de transport (12a, 12b) respective et indépendamment de l'autre unité de transport (12a, 12b) dans toute direction de déplacement, et
- chaque unité de transport (12a, 12b) comprenant un système de commande pour commander le mouvement de l'unité de transport (12a, 12b) respective,
- ledit système de commande exécutant une logique de commande pour commander le mouvement de l'unité de transport (12a, 12b) respective ;
**caractérisé en ce que**
- les systèmes de commande de la première et de la deuxième unité de transport (12a, 12b) exécutent la logique de commande indépendamment l'un de l'autre et de manière synchrone de telle façon que l'exécution de la logique de commande par les systèmes de commande de la première et de la deuxième unité de transport (12a, 12b) a lieu simultanément et de la même manière.

2. Procédé de commande selon la revendication précédente, **caractérisé en ce que** la logique de commande comprend plusieurs étapes de procédé, lesdits systèmes de commande de la première et de la deuxième unité de transport (12a, 12b) exécutant chaque étape de procédé indépendamment l'un de l'autre et de manière synchrone.

3. Procédé de commande selon l'une des revendications précédentes, **caractérisé en ce que** chaque unité de transport (12a, 12b) présente un système de détection (25) pour la détection de paramètres environnementaux, et la logique de commande comprend une étape de détection lors de laquelle des informations d'environnement sont déterminées, lesdites informations d'environnement comprenant des informations concernant les obstacles et/ou les supports de charge (16) présents dans l'environnement du dispositif de transport (10), la logique de commande comprenant notamment une étape de calcul de qualité subséquente à l'étape de détection et lors de laquelle des informations qualitatives sont déterminées, lesquelles comprennent des informations concernant la qualité, notamment une valeur de qualité, des informations d'environnement calculées à l'étape de détection.

4. Procédé de commande selon l'une des revendications précédentes, **caractérisé en ce que** chaque unité de transport (12a, 12b) comprend une unité d'émission et de réception reliée au système de commande et permettant à chaque unité de transport (12a, 12b) d'envoyer et de recevoir, sur un canal de communication d'un réseau, des informations consistant notamment en des informations d'état de l'unité de transport (12a, 12b) émettrice, notamment des informations concernant l'usure et/ou les réserves d'énergie de l'unité de transport (12a, 12b) émettrice.

5. Procédé de commande selon la revendication 4 combinée à la revendication 3, **caractérisé en ce que**
- les informations consistent en lesdites informations d'environnement de l'unité de transport (12a, 12b) émettrice, et/ou
- les informations comprennent les informations d'environnement et les informations qualitatives de l'unité de transport (12a, 12b) émettrice.

6. Procédé de commande selon la revendication 5, **caractérisé en ce que** les informations ne contiennent aucune information de source concernant l'unité de transport (12a, 12b) émettrice.

7. Procédé de commande selon l'une des revendications 5 et 6, **caractérisé en ce que** la logique de commande comprend une étape d'examen de la qualité,
- les informations d'environnement et les informations qualitatives de l'autre unité de transport (12a, 12b) respective étant reçues par l'unité d'émission et de réception et comparées aux informations d'environnement et aux informations qualitatives de l'unité de transport (12a, 12b) réceptrice,
- les informations d'environnement et les informations qualitatives de l'autre unité de transport (12a, 12b) respective qui ont été reçues étant combinées avec les informations d'environnement et les informations qualitatives de l'unité de transport (12a, 12b) réceptrice si cela permet d'élever la qualité des informations d'environnement,
- de nouvelles informations qualitatives étant déterminées lors de ladite combinaison et une qualité maximale étant attribuée aux informations d'environnement si les informations qualitatives nouvellement déterminées présentent une qualité supérieure à un seuil défini fixe,
- les informations d'environnement combinées étant transmises avec les informations qualitatives déterminées par l'unité d'émission et de réception.

8. Procédé de commande selon la revendication 7, **caractérisé en ce que** l'étape d'examen de la qualité est réalisée dans une fenêtre de temps définie.

9. Procédé de commande selon l'une des revendications 4 à 8, **caractérisé en ce que** plusieurs dispositifs de transport (10) forment un système de transport et **en ce qu'**un ordre de transport, qui comprend des informations concernant le site actuel et la destination d'un support de charge (16) à transporter, est envoyé simultanément sur le réseau à toutes les unités de transport (12a, 12b) du système de transport.

10. Procédé de commande selon la revendication 9, **caractérisé en ce que** les systèmes de commande de toutes les unités de transport (12a, 12b) du système de transport exécutent la logique de commande indépendamment les uns des autres et de manière synchrone.

11. Procédé de commande selon la revendication 10, **caractérisé en ce que** la logique de commande comprend une étape d'examen des coûts lors de laquelle
- l'ordre de transport est reçu par l'unité d'émission et de réception,
- une valeur de coût est déterminée en fonction de l'ordre de transport,
- la valeur de coût déterminée est envoyée par l'unité d'émission et de réception,
- les valeurs de coût des autres unités de transport (12a, 12b) respectives du système de transport sont reçues par l'unité d'émission et de réception,
- les valeurs de coût des autres unités de transport (12a, 12b) respectives sont comparées à la valeur de coût précédemment déterminée, et
- si la valeur de coût précédemment déterminée représente la plus petite valeur de coût ou celle qui lui est immédiatement supérieure, le système de commande effectue la commande du mouvement de l'unité de transport (12a, 12b) de façon que le support de charge (16) soit transporté par l'unité de transport (12a, 12b).

12. Procédé de commande selon la revendication 11, **caractérisé en ce que** l'étape d'examen des coûts est réalisée dans une fenêtre de temps définie.

13. Procédé de commande selon l'une des revendications 3 à 12, **caractérisé en ce que** plusieurs unités de transport (10) se déplaçant les unes à la suite des autres forment une flotte d'unités de transport et **en ce que** la logique de commande comprend une étape d'examen d'informations au cours de laquelle la qualité des informations d'environnement déterminée est comparée à la qualité indiquée dans les informations qualitatives des autres unités de transport (12a, 12b) respectives de la flotte d'unités de transport et, si une valeur différentielle définie est dépassée, les informations d'environnement de l'unité de transport concernée sont rejetées et les informations d'environnement des autres unités de transport (12a, 12b) respectives de la flotte d'unités de transport servent alors à la poursuite de la commande de l'unité de transport (12a, 12b).

14. Procédé de commande selon la revendication 1 combinée à la revendication 4, **caractérisé en ce que** la logique de commande comprend une étape d'adaptation de mouvement lors de laquelle
- des paramètres de commande de l'autre unité de transport respective, notamment la deuxième unité de transport (12b), sont reçus par l'unité d'émission et de réception, et
- les paramètres de commande de ladite autre unité de transport respective, notamment la deuxième unité de transport (12b), servent à la commande du mouvement de ladite unité de transport, notamment la première unité de transport (12a).

15. Dispositif de transport (10) destiné à transporter des supports de charge chargés et non chargés (16),
- ledit dispositif de transport (10) présentant une première unité de transport (12a) et une deuxième unité de transport (12b),
- chaque unité de transport (12a, 12b) étant mobile par rapport à l'autre unité de transport (12a, 12b) et indépendamment de l'autre unité de transport (12a, 12b) dans toute direction de déplacement, et
- chaque unité de transport (12a, 12b) comprenant un système de commande pour commander le mouvement de l'unité de transport (12a, 12b) respective,
- ledit système de commande exécutant une logique de commande pour commander le mouvement de l'unité de transport (12a, 12b) respective ;
**caractérisé en ce que**
- les systèmes de commande de la première et de la deuxième unité de transport (12a, 12b) exécutent la logique de commande indépendamment l'un de l'autre et de manière synchrone de telle façon que l'exécution de la logique de commande par les systèmes de commande de la première et de la deuxième unité de transport (12a, 12b) a lieu simultanément et de la même manière.
